# EUROPEAN PATENT APPLICATION

(11) **EP 1 568 555 A1**
(43) Date of publication of application: **31.08.2005**
(21) Application number: 03780676.7
(22) Date of filing: 03.12.2003
(51) Int. Cl.: B60R 25/04

(54) **AUTHENTICATION APPARATUS, ELECTRONIC DRIVER'S LICENSE AND AUTHENTICATION SYSTEM**

(30) Priority: 04.12.2002 JP 2002352429; 22.01.2003 JP 2003013402; 30.09.2003 JP 2003341216
(71) Applicant: MATSUSHITA ELECTRIC INDUSTRIAL CO., LTD., Osaka 571-8501 (JP)
(72) Inventor: YUHARA, Masahiro, Yokohama-shi, Kanagawa 246-0011 (JP); NAGASE, Hiroyuki, Yokohama-shi, Kanagawa 241-0011 (JP)
(74) Representative: Pautex Schneider, Nicole Véronique
(86) International application number: PCT/JP2003/015480
(87) International publication number: WO 2004/050437

(57) **Abstract**

Herein disclosed is an authenticating apparatus, comprising:
an in-vehicle communicating unit of communicating with an electric license card storing license card information including a driver's identification information; an authenticating unit of authenticating said license card information; and an activating unit of activating at least one of operations of a vehicle, in which the in-vehicle communicating unit obtains the license card information and activating information of activating at least one of functions equipped on the vehicle from said electric license card , and the activating unit activates functions designated by the activating information, when the authenticating unit correctly authenticates said license card information.

## Description

### FIELD OF THE INVENTION

The present invention relates to an authenticating apparatus, an electric license card, and an authenticating system.

### BACKGROUND OF THE INVENTION

Conventionally, there has been disclosed an authenticating system for permitting unlocking of vehicle doors and/or starting of an engine, when license card information fetched from an electric license card agrees with license card information preliminarily registered in the authenticating system.

The above-described conventional authenticating system, however, has a problem that the system releases operation of all in-vehicle apparatuses as long as license card information has preliminarily been stored in the authenticating system, because the authenticating system allows to unlock doors and/or to start an engine, when license card information read out from an electric license card agrees with license card information preliminarily registered in the system.

For example, there may be a case that it is desirable that a person can unlock doors of a vehicle, but the person cannot drive the vehicle.

There may be a different case that it is desirable that persons except an owner of a vehicle cannot open a luggage compartment of the vehicle.

(Further, it is futile that a person who is permitted not only to unlock the doors, but also to start the engine, gains approval at each time when the person wishes to unlock the doors and when the person wishes to start the engine.)

Further, there may be a further different case that it is desirable that a person who is permitted to unlock doors and driving a vehicle cannot open a luggage compartment of the vehicle.

The conventional authenticating system, however, activates all functions of the vehicle.

The electric license card not only indicates a name and an address of an owner on the surface, but also stores more detailed personal information such as registered domicile in the storing unit.

It is desirable that the detailed personal information is read out from the electric license card, only when the owner of the electric license card inputs a security code which is determined by himself (herself) in order to avoid third persons perceiving the detailed personal information.

Therefore, the conventional authenticating apparatus has faults that the apparatus cannot register and/or read out the detailed personal information stored in the electric license card in order to improve security by permitting to utilize the in-vehicle apparatuses in accordance with the detailed personal information.

It is, therefore, the first object of the present invention to provide an authenticating apparatus, an electric license card, and an authenticating system that permits a driver to utilize the in-vehicle apparatuses that the driver needs to operate, and has permission to operate, in order to solve the above-described problem.

Further, it is the second object to provide an authenticating apparatus, an electric license card, and an authenticating system that permits a driver to utilize the in-vehicle apparatuses when the driver is authenticated as personal information read out from the electric license card agrees with reference personal information stored in the authenticating apparatus, even if the electric license card does not output the detailed personal information as long as a security code inputted by the driver agrees with the security code.

### SUMMARY OF THE INVENTION

### (Claim 1)

An authenticating apparatus according to the present invention comprises an in-vehicle communicating unit for communicating with an electric license card storing license card information including a driver identification information, an authenticating unit for authenticating the license card information, and an activating unit for activating at least one function equipped on a vehicle; the in-vehicle communicating unit being operable to obtain the license card information and activating information of activating at least one function equipped on the vehicle from the electric license card, and the activating unit being operable to activate functions designated by the activating information, when the authenticating unit correctly authenticates the license card information.

The authenticating apparatus according to the present invention thus constructed as previously mentioned permits the driver having permission to operate the functions equipped on said vehicle to activate the functions necessary to drive the vehicle.

### (Claim 2)

In the authenticating apparatus according to the present invention, the in-vehicle communication unit transmits position information specified by a position on the outer surface of the vehicle when acquiring the license card information and the activating information, and the activating unit activates functions designated by the activating information transmitted from the electric license card in accordance with the position information.

The authenticating apparatus according to the present invention thus constructed as previously mentioned permits functions in accordance with the position information to be activated, because the authenticating apparatus activates functions designated by the position information.

### (Claim 3)

In the authenticating apparatus according to the present invention, the in-vehicle communicating unit transmits the position information, when the electric license card is existing adjacent to the in-vehicle communicating unit, and the authenticating unit authenticates the license card information, when request for authenticating is issued from the electric license card.

The authenticating apparatus according to the present invention thus constructed as previously mentioned can save electric power consumption, because the in-vehicle communicating unit transmits the position information, when the electric license card is existing adjacent to the in-vehicle communicating unit.

### (Claim 4)

An authenticating apparatus according to the present invention comprises an in-vehicle communicating unit of communicating with an electric license card storing license card information including a driver's identification information, an authenticating unit of authenticating the license card information, an activating unit of activating at least one of operations of a vehicle, and a storing unit of storing functions equipped the vehicle to be permitted for each of drivers by relating said functions to the license card information; the in-vehicle communicating unit obtains the license card information from the electric license card, and the activating unit activates functions related to the license card information stored in the storing unit, when the authenticating unit correctly authenticates the license card information.

The authenticating apparatus according to the present invention thus constructed as previously mentioned permits the driver having permission to operate the functions equipped on said vehicle to activate the functions necessary to drive the vehicle.

### (Claim 5)

In the authenticating apparatus according to the present invention, the activating unit is connected to an engine control apparatus for controlling an engine of the vehicle, and activates the engine, when the authenticating unit correctly authenticates the license card information.

The authenticating apparatus according to the present invention thus constructed as previously mentioned can prevent a person who does not accompany with a license card or is not licensed from driving a vehicle, because a person without a license card cannot start the engine.

### (Claim 6)

In the authenticating apparatus according to the present invention, the activating unit is connected to a door unlocking apparatus for unlocking doors of the vehicle, and unlocks the doors, when the authenticating unit correctly authenticates the license card information.

The authenticating apparatus according to the present invention thus constructed as previously mentioned can prevent a person who does not accompany with a license card or is not licensed from driving a vehicle, because a person without a license card cannot unlock the doors.

### (Claim 7)

In the authenticating apparatus according to the present invention, the activating unit is connected to an in-vehicle telephone apparatus, and activates the in-vehicle telephone apparatus, when the authenticating unit correctly authenticates said license card information.

The authenticating apparatus according to the present invention thus constructed as previously mentioned permits to utilize the in-vehicle telephone apparatus in accordance with license card information of the owner, and can obtain record of using the in-vehicle telephone apparatus in each of the electric license cards.

### (Claim 8)

In the authenticating apparatus according to the present invention, the activating unit is connected to an in-vehicle audio apparatus, and activates the in-vehicle audio apparatus, when the authenticating unit correctly authenticates said license card information.

The authenticating apparatus according to the present invention thus constructed as previously mentioned permits to utilize the in-vehicle audio apparatus in accordance with license card information of the owner, and can obtain record of using the in-vehicle audio apparatus (name of selected songs, name of tuned radio stations) in each of the electric license cards to customize the audio apparatus.

### (Claim 9)

In the authenticating apparatus according to the present invention, the activating unit is connected to a combination meter apparatus, and activates the combination meter apparatus, when the authenticating unit correctly authenticates said license card information.

The authenticating apparatus according to the present invention thus constructed as previously mentioned permits to utilize the combination meter apparatus in accordance with license card information of the owner.

The authenticating apparatus according to the present invention thus constructed as previously mentioned can obtain record of using the combination meter apparatus in each of the electric license cards to customize the audio apparatus, and can refer the record for a second chance.

### (Claim 10)

In the authenticating apparatus according to the present invention, the activating unit is connected to an emergency report apparatus, and activates the emergency report apparatus, when the authenticating unit correctly authenticates said license card information.

The authenticating apparatus according to the present invention thus constructed as previously mentioned can transmit position information of the vehicle, emergency call and health information of the owner of the electric license card to an emergency center, when emergency physical ailment of the electric license card 2100 occurs, and can take adequate treatment for the owner of the electric license card by referring the health information of the owner of the electric license card on the way to the accident spot.

### (Claim 11)

In the authenticating apparatus according to the present invention, the activating unit is connected to a road-vehicle communication apparatus, and activates the road-vehicle communication apparatus, when the authenticating unit correctly authenticates said license card information.

The authenticating apparatus according to the present invention thus constructed as previously mentioned permits the owner of the electric license card adequately to utilize the road-vehicle communication apparatus.

The authenticating apparatus according to the present invention thus constructed as previously mentioned can store shopping information at a drive through store, and vehicle inspection information, vehicle failure information, and vehicle maintenance information at a dealer in the electric license card. Further, information stored in the in-vehicle unit can easily and securely be transmitted out of the vehicle by using the road-vehicle communication system.

### (Claim 12)

An authenticating apparatus according to the present invention comprises a communicating unit of communicating with a on-certificate communicating unit mounted on an electric license card, a storing unit of storing a security code and corresponding personal information, a security code inputting means of inputting the security code for licensing at least one in-vehicle apparatus, an information registering/deleting means of registering the security code and the personal information read out from the electric license card in response to the security code inputted from the security code inputting means in the storing unit, and deleting the security code and the personal information registered in the storing unit, a security code transmitting means of sequentially transmitting security codes registered in the storing unit from the communicating unit to the on-certificate communicating unit until the electric license card authenticates one of the transmitted security codes, before starting to communicate with the communicating unit, a personal authenticating means of licensing at least one of the in-vehicle apparatuses, when personal information received by the in-vehicle communicating unit agrees with personal information registered in the storing unit.

The authenticating apparatus according to the present invention thus constructed as previously mentioned can obtain the personal information from the electric license card, when the electric license card does not output the personal information so long as the security code is not inputted, and registers the personal information as a piece of reference personal information, and can activate the in-vehicle apparatuses when a piece of personal information transmitted from the electric license card is authenticated based on the reference personal information.

### (Claim 13)

An authenticating apparatus according to the present invention further comprises a using frequency acquisition means of acquiring and storing using frequency of every driver, and the security code transmitting means transmits security code in decreasing order of using frequency stored in the using frequency acquisition means.

The authenticating apparatus according to the present invention thus constructed as previously mentioned can decrease the period of time from the start of transmitting the security code to the electric license card to the end of authenticating the security code in the security code authenticating means.

### (Claim 14)

An authenticating apparatus according to the present invention further comprises a using record acquisition means of acquiring using record of the in-vehicle apparatuses of every driver, and the security code transmitting means transmits security code in order by date stored in the using record acquisition means.

The authenticating apparatus according to the present invention thus constructed as previously mentioned can decrease the period of time from the start of transmitting the security code to the electric license card to the end of authenticating the security code in the security code authenticating means.

### (Claim 15)

An authenticating apparatus according to the present invention further comprises an annunciating means of annunciating a piece of annunciation annunciating restricting of security code inputting before prohibiting of security code inputting when the number of transmitting security code from the communicating unit mounted on the in-vehicle apparatus activating device to the communicating unit on the electrical license card is exceeds a predetermined number and restricting information is issued from the electric license card to said communicating unit of the in-vehicle apparatus activating device.

The authenticating apparatus according to the present invention thus constructed as previously mentioned can improve security by prohibiting continuously to input non-authenticated security codes to the electric license card, and can reduce the probability of rejecting further to input security codes. Further, the authenticating apparatus cannot only ensure security, but also activate the in-vehicle apparatuses, so that the user can correctly input the security code, or can ask a person who has been previously authenticated to obtain authentication by using the person's electric license card, because the annunciation of restricting inputting of the security code is issued.

### (Claim 16)

An electric license card according to the present invention comprises a storing unit of storing license card information including driver identifying information, and an internal communicating unit of communicating with a vehicle or in-vehicle apparatuses; the storing means stores function information informing about function of vehicle to be activated, and the internal communicating unit informs the license card information and the function information to the vehicle or said in-vehicle apparatuses.

The electric license card according to the present invention thus constructed as previously mentioned permits the driver having permission to operate the functions equipped on said vehicle to activate the functions necessary to drive the vehicle.

### (Claim 17)

In the electric license card according to the present invention, the internal communicating unit receives position information of the vehicle or the in-vehicle apparatuses, and informs activating information corresponding to the position information to the vehicle or the in-vehicle apparatuses.

The electric license card according to the present invention thus constructed as previously mentioned permits functions in accordance with the position information to be activated, because functions designated by the position information are activated.

### (Claim 18)

An authenticating system according to the present invention comprises an electric license card providing a storing unit of storing license card information including driver identifying information, and an internal communicating unit of communicating with a vehicle or in-vehicle apparatuses, and an authenticating device providing an in-vehicle communicating unit of communicating with the internal communicating unit, an authenticating unit of authenticating the license card information, and an activating unit of activating of activating the in-vehicle apparatuses; the storing means stores function information informing about function of vehicle to be activated, the internal communicating unit informs said license card information and said function information to said vehicle or said in-vehicle apparatuses, the in-vehicle communicating unit receives said license card information and said activating information for activating the in-vehicle apparatuses, and the activating means of activating the in-vehicle apparatuses designated by the function information when the authenticating unit correctly authenticates the license card information.

The authenticating system according to the present invention thus constructed as previously mentioned permits the driver having permission to operate the functions equipped on the vehicle to activate the functions necessary to drive the vehicle.

### (Claim 19)

In the authenticating system according to the present invention, the authenticating unit transmits authenticating result as reserving of using the in-vehicle apparatuses to the electric license card

The authenticating system according to the present invention thus constructed as previously mentioned cannot inform whether or not a person who intends to utilize the in-vehicle apparatuses is permitted to utilize the in-vehicle apparatuses by the electric license card, but also can inform authenticating result to the person who intends to utilize the in-vehicle apparatuses.

### (Claim 20)

In the authenticating system according to the present invention, the authenticating device transmits operating information informing whether or not the in-vehicle apparatuses have been activated as a result of authenticating.

The authenticating system according to the present invention thus constructed as previously mentioned cannot inform whether or not a person who intends to utilize the in-vehicle apparatuses is permitted to utilize the in-vehicle apparatuses by the electric license card, but also can inform whether or not the authenticating apparatus begins to operate to the person who intends to utilize the in-vehicle apparatuses.

### (Claim 21)

In the authenticating system according to the present invention, the authenticating device stores activating information informing which of in-vehicle apparatuses can be activated according to the electric license card, and controls activating of the in-vehicle apparatuses according to the electric license card.

The authenticating system according to the present invention thus constructed as previously mentioned cannot record the activating information of activating the in-vehicle apparatuses in the electric license card, but also can customize activating information in accordance with the electric license card.

### (Claim 22)

In the authenticating system according to the present invention, the electric license card is of a non-contact IC card type.

The authenticating system according to the present invention thus constructed as previously mentioned cannot only wirelessly communicate information, but also can obtain electric power with high frequency radio wave by utilizing a non-contact type license card without terminals connected with an external apparatus.

### (Claim 23)

An authenticating system according to the present invention comprises an electric license card providing a storing unit included in a electric license card of storing license card information and security code for reading out the license card information, a communicating unit included in the electric license card of communicating with a vehicle or in-vehicle apparatuses, and a security code authenticating unit for controlling transmitting by the communicating unit included in the electric license card, and an authenticating device providing a communicating unit mounted in the authenticating device, a security code inputting unit of inputting security code, a storing unit mounted on the authenticating device of storing the security code inputted from the security code inputting unit a security code, transmitting unit of transmitting the security code stored in the storing unit mounted on the authenticating device to said communicating unit mounted on the authenticating device, and a person authenticating unit of authenticating said license card information, and of activating the in-vehicle apparatuses; the storing unit included in the electric license card stores function information informing function of the vehicle, the communicating unit mounted on the authenticating device transmits the security transmitted from said security code transmitting unit to said electric license card, the security code authenticating unit determines whether or not the security code transmitted from the authenticating device agrees with security code stored in the storing unit included in the electric license card, and transmits the license card information and the function information when the security code authenticating unit determines the security code transmitted from the authenticating device agrees with security code stored in the storing unit included in the electric license card, the communicating unit mounted on the authenticating device receives the license card information and the activating information informing the function to be activated, and the person authenticating unit activates the in-vehicle apparatuses designated by the function information when the person authenticating unit correctly authenticates the license card information.

The authenticating system according to the present invention thus constructed as previously mentioned can obtain the personal information from the electric license card, when the electric license card does not output the personal information so long as the security code is not inputted, and registers the personal information as a piece of reference personal information, and can activate the in-vehicle apparatuses when a piece of personal information transmitted from the electric license card is authenticated based on the reference personal information.

### (Claim 24)

An authenticating system according to the present invention further comprises a using frequency acquisition means of acquiring using frequency of the in-vehicle apparatuses activated by the electric license card according to the user, and the security code transmitting unit transmits security code in decreasing order of using frequency stored in said storing unit mounted on the authenticating device.

The authenticating apparatus according to the present invention thus constructed as previously mentioned can decrease the period of time from the start of transmitting the security code to the electric license card to the end of authenticating the security code in the security code authenticating means.

### (Claim 25)

An authenticating system according to the present invention further comprises using record acquisition unit of acquiring using record of the in-vehicle apparatuses activated by the electric license card according to the user, and the security code transmitting unit transmits security code in dating order of using record stored in said storing unit mounted on the authenticating device.

The authenticating apparatus according to the present invention thus constructed as previously mentioned can decrease the period of time from the start of transmitting the security code to the electric license card to the end of authenticating the security code in the security code authenticating means.

### (Claim 26)

An authenticating system according to the present invention further comprises a security code rejecting unit of rejecting further security codes when the number of continuously transmitting of security codes from the communicating unit mounted on the authenticating device to the communicating unit included in the electric license card exceeds a predetermined number, and an annunciating unit of annunciating a piece of annunciation annunciating for restricting inputting of security code before prohibiting inputting of security code.

The authenticating apparatus according to the present invention thus constructed as previously mentioned can improve security by prohibiting continuously to input non-authenticated security codes to the electric license card, and can reduce the probability of rejecting further to input security codes.

Further, the authenticating apparatus cannot only ensure security, but also activate the in-vehicle apparatuses, so that the user can correctly input the security code, or can ask a person who has been previously authenticated to obtain authentication by using the person's electric license card, because the annunciation of restricting inputting of the security code is issued.

### BRIEF DESCRIPTION OF THE DRAWINGS

FIG 1 is a block diagram of a first embodiment of an authenticating apparatus according to the present invention.
FIG 2 is a block diagram of an electric license card used in the first embodiment of an authenticating apparatus.
FIG 3 is a sequence diagram showing the operation of the first embodiment of an authenticating apparatus and an electric license card.
FIG 4 is a sequence diagram showing the operation of the second embodiment of an authenticating apparatus and an electric license card.
FIG 5 is a block diagram of an electric license card used in the fourth and fifth embodiment of an authenticating system.
FIG 6 is a time chart showing the operation of the fourth embodiment of an authenticating system according to the present invention.
FIG 7 is a time chart showing the operation of the fifth embodiment of an authenticating system according to the present invention.
FIG 8 is a block diagram of the sixth embodiment of an authenticating system according to the present invention.
FIG. 9 is a time chart showing the operation of the sixth embodiment of an authenticating system according to the present invention.
FIG 10 is a block diagram of the seventh embodiment of an authenticating system according to the present invention.
FIG 11 is a time chart showing the operation of the seventh embodiment of an authenticating system according to the present invention.
FIG 12 is a block diagram of the eighth embodiment of an authenticating system according to the present invention.
FIG 13 is a time chart showing the operation of the eighth embodiment of an authenticating system according to the present invention.
FIG 14 is a block diagram of the ninth embodiment of an authenticating system according to the present invention.
FIG 15 is a time chart showing the operation of the ninth embodiment of an authenticating system according to the present invention.
FIG 16 is a block diagram of the tenth embodiment of an authenticating system according to the present invention.
FIG 17 is a time chart showing the operation of the tenth embodiment of an authenticating system according to the present invention.
FIG 18 is a block diagram of the eleventh embodiment of an authenticating system according to the present invention.
FIG 19 is a time chart showing the operation of the eleventh embodiment of an authenticating system according to the present invention.
FIG 20 is a block diagram of a non-contact IC card type electric license card.
FIG 21 is a block diagram of the twelfth embodiment of the authenticating system according to the present invention.
FIG 22 is a time chart showing the operation of the twelfth embodiment of an authenticating system according to the present invention.
FIG 23 is a block diagram of the thirteenth embodiment of the authenticating system according to the present invention.
FIG 24 is a time chart showing the operation of the thirteenth embodiment of an authenticating system according to the present invention.
FIG. 25 is a block diagram of the fourteenth embodiment of the authenticating system according to the present invention.

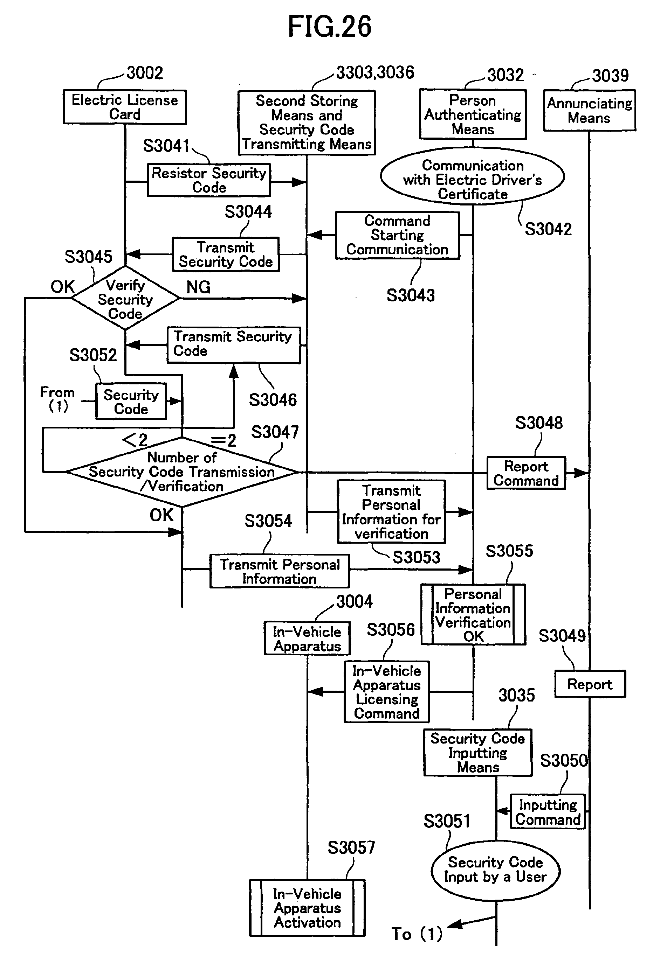

FIG 26 is a time chart showing the operation of the fourteenth embodiment of an authenticating system according to the present invention.

### DESCRIPTION OF THE PREFERRED EMBODIMENTS

The following description will be directed to a plurality of preferred embodiments according to the present invention with reference to the drawings.

### [First Embodiment]

In the first embodiment, a first communicating unit 1111, a second communicating unit 1112, and a third communicating unit 1113 are the same as an in-vehicle communicating unit.

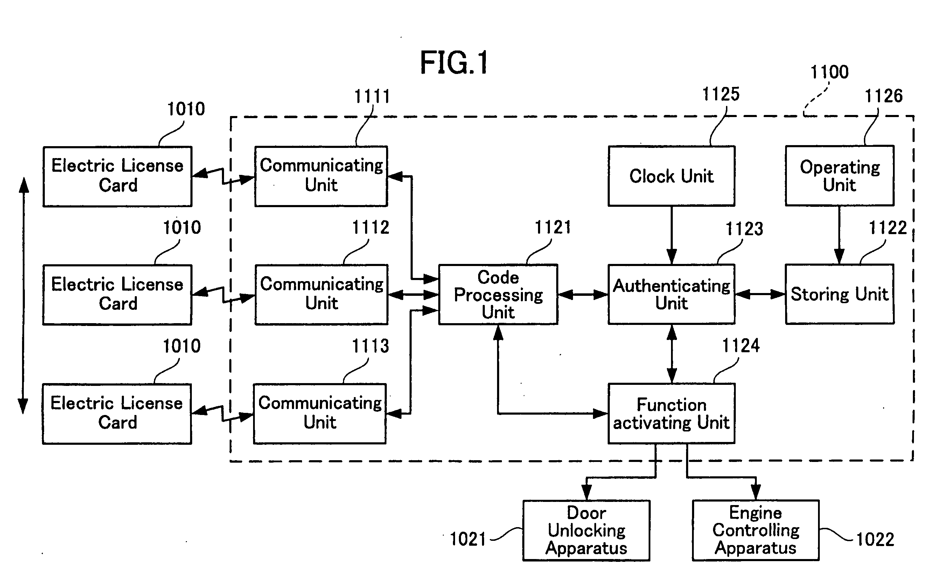

FIG. 1 is a block diagram of the first embodiment of an authenticating apparatus (in-vehicle apparatus) according to the present invention.

In FIG 1, an authenticating apparatus 1100 is constructed so as to be mounted on a vehicle, to wirelessly communicate with an electric license card 1010, and to authenticate license card information.

The authenticating apparatus 1100 comprises a plurality of communication units (a first communicating unit 1111, a second communicating unit 1112, and a third communicating unit 1113) that communicates with an electric license card 1010, a code processing unit 1121 that decodes license card information, function information, and other information received from the electric license card 1010, a storing unit 1122 that stores license card information of a person who is authorized to use at least one of functions equipped on the vehicle, an authenticating unit 1123 that authenticates license card information stored in the electric license card 1010, a function activating unit 1124 that licenses at least one function designated by the electric license card 1010, a clock unit 1125 that measures time an operating unit 1126 to transmit information to the storing unit 1122.

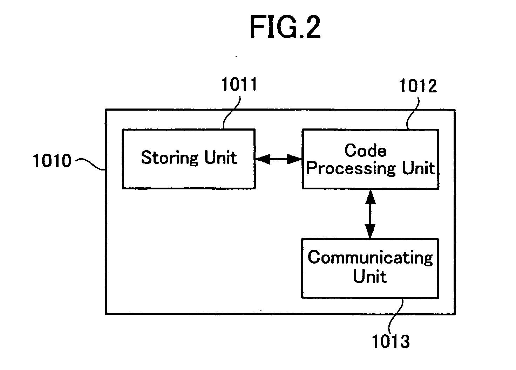

As shown in FIG 2, the electric license card comprises a storing unit 1011 of storing license card information, function information, and other information of the owner of the electric license card, a code-processing unit 1012 of encoding the license card information, function information, and other information stored in the storing unit 1011, and a communicating unit 1013 of transmitting the decoded license card information, function information, and other information to the authenticating apparatus 1100.

The communicating unit 1013 is constructed so as to receive position information, and other information from the authenticating apparatus 1100, and the code-processing unit 1012 is constructed so as to decode encoded information from the authenticating apparatus 1100.

Note, the license card information includes a driver's name, a driver's birth date, a driver's address, an expiration date of the certificate, a certificate number, a driver's photograph, a driver's totting-up.

The function information means information that which functions the driver is permitted using, and includes door unlocking information, engine starting information, luggage compartment unlocking information, and the like.

The position information shows the position of the electric license card 1010 around the vehicle, and indicates that the electric license card 1010 exists in the vicinity of the doors or the luggage compartment.

The first communicating unit 1111 in the authenticating apparatus 1100 is allocated in the vicinity of the door, and is constructed so as to transmit position information designating that the electric license card 1010 exists outside the door in the vicinity of the driver's seat, when the electric license card 1010 is placed outside the door in the vicinity of the driver's seat.

The position information may be generated when the driver touches the door or the doorknob, when the driver approaches in the vicinity of the door, or when the electric license card 1010 contacts with the door of the vehicle or a predetermined part in the vicinity of the door.

The second communicating unit 1112 in the authenticating apparatus 1100 is allocated in front of the driver's seat, and is constructed so as to transmit position information designating that the electric license card 1010 exists inside the vehicle and in the vicinity of the driver's seat, when the electric license card 1010 is placed inside the vehicle and in the vicinity of the driver's seat.

The position information may be generated, when the electric license card 1010 is inserted in a holder allocated in front of the driver's seat, or when it is detected that the driver sits on the driver's seat.

The third communicating unit 1113 in the authenticating apparatus 1100 is allocated in the luggage compartment of the rear coach, and is constructed so as to transmit position information designating that the electric license card 1010 exists in the vicinity of the luggage compartment outside the vehicle, when the electric license card 1010 is placed in the vicinity of the luggage compartment outside the vehicle.

The position information may be generated, when the driver touches a doorknob to unlock the luggage compartment, when the driver approaches in the vicinity of the luggage of the compartment, or when the electric license card 1010 contacts with a part in the vicinity of the luggage compartment.

The code processing unit 1121 of the authenticating apparatus 1100 is constructed so as to encode information transmitted to the electric license card 1010, and to decode information received from the electric license card 1010.

The storing unit 1122 of the authenticating apparatus 1100 stores plurality pieces of driver's information. In this embodiment, drivers are classified into three groups, and the drivers belonging to the first group are permitted only to unlock the door, the drivers belonging to the second group are permitted to unlock the door and to start the engine, and the drivers belonging to the third group are permitted to unlock the door, to start the engine, and to unlock the luggage compartment.

Note, though the description of this embodiment designates that the vehicle functions means door unlocking function, engine starting function, or luggage compartment unlocking function, the vehicle functions may include other functions such as an in-vehicle telephone apparatus.

The authenticating unit 1123 of the authenticating apparatus 1100 is constructed so as to authenticate license card information stored in the electric license card 1010, by comparing license card information received from the electric license card 1010 with license card information pre-stored in the storing unit 1122.

Note, the authenticating unit 1123 authenticates all items included in license card information received from the electric license card 1010 by comparing with corresponding items stored in the storing unit 1122, but the authenticating unit 1123 may authenticate only based on a driver's name, only based on a certificate number, or based on a combination of several items.

The authenticating unit 1123 of the authenticating apparatus 1100 may determine whether or not the driver's totting-up is below a predetermined point.

Further, the authenticating unit 1123 of the authenticating apparatus 1100 may judge whether or not the type of the vehicle received from the electric license card 1010 corresponds to the actual type of vehicle.

The authenticating unit 1123 of the authenticating apparatus 1100 may judge whether or not the present date is before the expiration date of the electric license card 1010 based on the driver's birth date and the expiration date received from the electric license card 1010.

The function activating unit 1124 of the authenticating apparatus 1100 is constructed so as to activate the vehicle functions designated by function information received from the electric license card 1010.

Specially, the function activating unit 1124 permits a door unlocking apparatus 1021 unlocking the door, when the authenticating apparatus 1100 receives function information designating to unlock the door.

The function activating unit 1124 permits an engine controlling apparatus 1022 starting the engine, when the authenticating apparatus 1100 receives function information designating to start the engine.

Further, the function activating unit 1124 permits the door unlocking apparatus 1021 unlocking the luggage compartment, when the authenticating apparatus 1100 receives function information designating to unlock the luggage compartment.

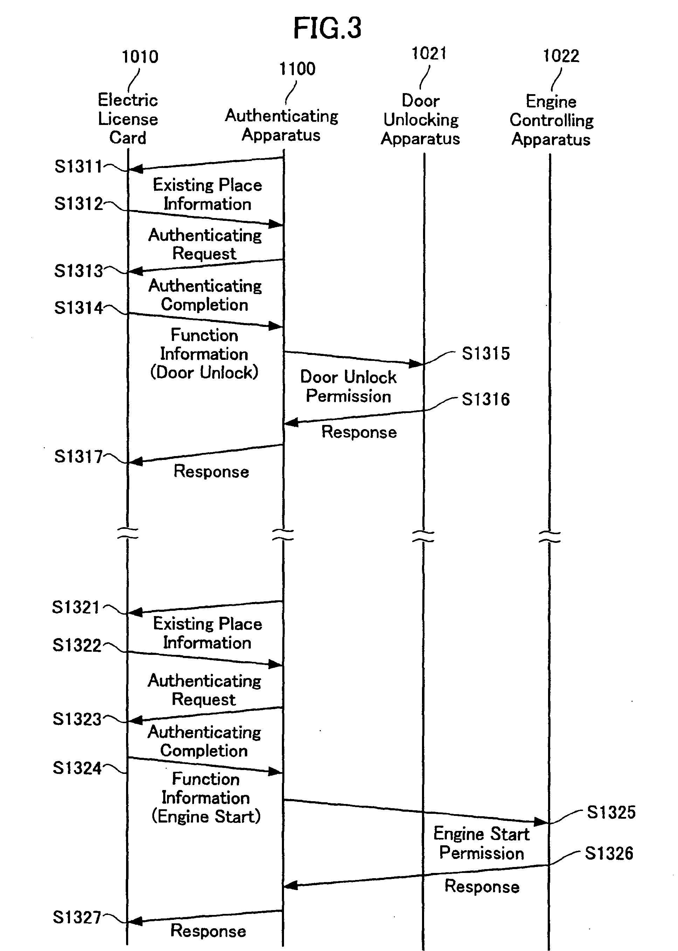

The operation of the first embodiment of the authenticating apparatus 1100 will be described with reference to FIG 3, hereinafter.

When the driver accompanying with the electric license card 1010 approaches to the door in the vicinity of the driver's seat, position information informing that the electric license card 1010 exists at the outside of the vehicle door in the vicinity of the driver's seat is transmitted from the first communicating unit 1111 allocated in the vicinity of the door (S1311).

The electric license card 1010 transmits authenticating request to the authenticating apparatus 1100, when the electric license card 1010 receives the position information (S 1312).

In this embodiment, the authenticating request contains decoded license card information.

The license card information from the electric license card 1010 is received by the first communicating unit 1111 of the authenticating apparatus 1100, decoded by the code processing unit 1121 of the authenticating apparatus 1100, and authenticated by the authenticating unit 1123 of the authenticating apparatus 1100.

Authenticating is executed by comparing license card information received by the first communicating unit 1111 with license card information pre-stored in the storing unit 1122 of the authenticating apparatus 1100.

When the license card information is correctly authenticated, authenticating completion is issued from the first communicating unit 1111 of the authenticating apparatus (S1313).

The electric license card 1010 transmits function information designating to unlock the door, because the electric license card 1010 exists outside the door in the vicinity of the driver's seat (S 1314).

The function information is received by the first communicating unit 1111 of the authenticating apparatus 1100, decoded by the code processing unit 1121, and outputted a door unlocking signal to the door unlocking apparatus 1021 through the function activating unit 1124 (S 1315).

The door unlocking apparatus 1021 receiving the door-unlocking signal unlocks the door, and a door-unlocking completion signal is transmitted to the electric license card 1010 through the authenticating apparatus 1100 (S 1316, S 1317).

Therefore, the driver can unlock the door of the vehicle.

When the driver accompanying with the electric license card 1010 sits on the driver's seat, position information informing that the electric license card 1010 exists inside the vehicle, and in the vicinity of the driver's seat is transmitted from the second communicating unit 1112 allocated in front of the driver's seat (S1321).

The electric license card 1010 transmits authenticating request to the authenticating apparatus 1100, when the electric license card 1010 receives the position information (S1322).

The license card information from the electric license card 1010 is received by the second communicating unit 1112 of the authenticating apparatus 1100, decoded by the code processing unit 1121 of the authenticating apparatus 1100, and authenticated by the authenticating unit 1123 of the authenticating apparatus 1100.

When the license card information is correctly authenticated, authenticating completion is issued from the second communicating unit 1112 of the authenticating apparatus (S1323).

The electric license card 1010 transmits function information designating to start the engine, because the electric license card 1010 exists in front of the driver's seat and inside the vehicle (S 1324).

The function information is received by the second communicating unit 1112 of the authenticating apparatus 1100, decoded by the code processing unit 1121, and outputted an engine-starting signal to the engine controlling apparatus 1022 through the function activating unit 1124 (S1325).

The engine controlling apparatus 1022 receiving the engine-starting signal starts the engine, and an engine-starting completion signal is transmitted to the electric license card 1010 through the authenticating apparatus 1100 (S1326, S1327).

Therefore, the driver can start the engine.

As described above, the first embodiment of the authenticating apparatus is constructed so that plurality of communicating units 1111, 1112, and 1113 receive function information informing vehicle function to be activated. Then, it is possible that the function activating unit 1124 activates the vehicle function specified by the function information when the license card information is correctly authenticated, and activates only vehicle functions corresponding to the driver because the function activating unit 1124 activates the vehicle function specified by the pre-stored function information,

The first embodiment of the authenticating apparatus 1100 is constructed so that plurality of communicating units 1111, 1112, and 1113 transmit position information designating a place where the electric license card is placed, and the function activating unit 1124 activates the vehicle function specified by the function information. Then, it is possible to activate correct vehicle functions corresponding the place where the license card is placed, because the function activating unit 1124 activates the vehicle functions based on the position information transmitted from the communicating units 1111, 1112, and 1113.

The first embodiment of the authenticating apparatus 1100 is constructed so that plurality of communicating units 1111, 1112, and 1113 transmit position information when the electric license card 1010 exists in the vicinity of one of communicating units 1111, 1112, and 1113, and the authenticating unit 1123 authenticates the license card information when the electric license card 1010 transmits authenticating request. Then, it is possible that the authenticating apparatus 1100 communicates with the electric license card 1010 only when the electric license card 1010 exists in the vicinity of the authenticating apparatus 1100, and reduces power consumption.

Further, because the first embodiment of the authenticating apparatus 1100 is constructed so that the electric license card 1010 can actively select the vehicle functions to be activated, smooth authenticating and activating are executed.
For example, when the electric license card 1010 that has been already authenticated is placed in the vicinity of the driver's seat again, authenticating process becomes simple because the electric license card 1010 can recognize to have been already authenticated.

The driver does not need to find the electric license card 1010, when the driver carries plurality of cards.

### [Second Embodiment]

The following description will be directed to a second embodiment according to the present invention.

In the second embodiment, a first communicating unit 1111, a second communicating unit 1112, and a third communicating unit 1113 are the same as an in-vehicle communicating unit.

In the second embodiment, the electric license card 1010 shown in FIG 2 is constructed so as to transmit function information informing that all of the vehicle functions specified by the electric license card 1010 are activated.

In the second embodiment, the authenticating apparatus 1100 shown in FIG 1, is constructed so as to simultaneously activate a plurality of functions, when the electric license card 1010 transmits function information informing a plurality of functions to be activated.

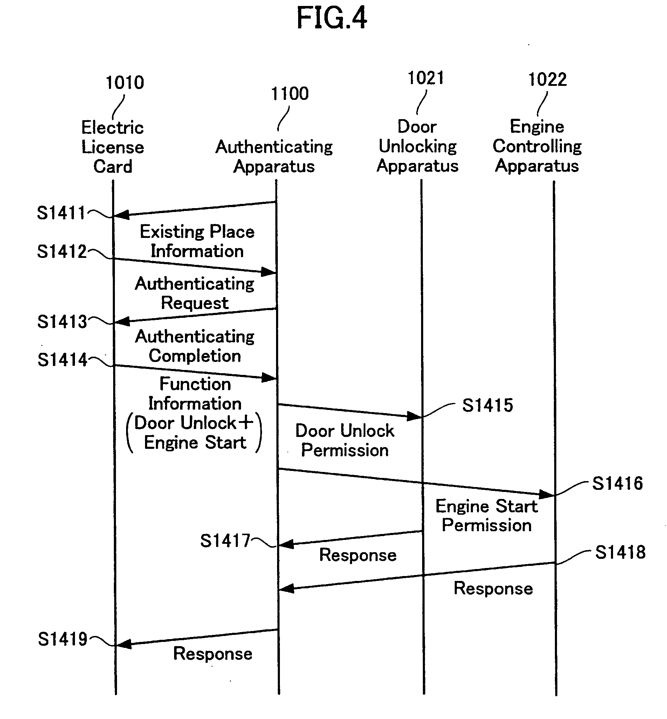

The operation of the second embodiment of the authenticating apparatus 1100 will be described with reference to FIG 4, hereinafter.

When the driver accompanying with the electric license card 1010 approaches to the door in the vicinity of the driver's seat, position information informing that the electric license card 1010 exists at the outside of the vehicle door in the vicinity of the driver's seat is transmitted from the first communicating unit 1111 allocated in the vicinity of the door (S1411).

The electric license card 1010 transmits authenticating request to the authenticating apparatus 1100, when the electric license card 1010 receives the position information (S1412).

In this embodiment, the authenticating request contains decoded license card information.

The license card information from the electric license card 1010 is received by the first communicating unit 1111 of the authenticating apparatus 1100, decoded by the code processing unit 1121 of the authenticating apparatus 1100, and authenticated by the authenticating unit 1123 of the authenticating apparatus 1100.

When the license card information is correctly authenticated, authenticating completion is issued from the first communicating unit 1111 of the authenticating apparatus (S1413). The electric license card 1010 transmits function information informing unlocking of the doors and starting of the engine are required to be activated, when the storing unit 1122 of the electric license card 1010 stores door unlocking function and engine starting function (S 1414).

The function information is received by the first communicating unit 1111 of the authenticating apparatus 1100, and is decoded by the code-processing unit 1121. Then, through the function activating unit 1124, a door unlocking signal is outputted to the door-unlocking apparatus 1021 (S1415), and an engine starting signal is outputted to the engine controlling apparatus 1022 (S 1416).

The door unlocking apparatus 1021 receiving the door-unlocking signal unlocks the door, and a door-unlocking completion signal is transmitted to the electric license card 1010 through the authenticating apparatus 1100 (S1417).

The engine controlling apparatus 1022 receiving the engine-starting signal starts the engine (S1418), and an engine-starting completion signal is transmitted to the electric license card 1010 through the authenticating apparatus 1100 (S1419).

Therefore, the driver cannot only unlock the doors, but also can start the engine.

### [Third Embodiment]

In this embodiment, a first communicating unit 1111, a second communicating unit 1112, and a third communicating unit 1113 are the same as an in-vehicle communicating unit.

The following description will be directed to a second embodiment according to the present invention.

In the third embodiment, the electric license card 1010 shown in FIG. 2 is constructed so as to transmit response signal to the authenticating apparatus 1100, when the electric license card 1010 receives a predetermined command from the authenticating apparatus 1100.

The authenticating apparatus 1100 shown in FIG 1 is constructed so that the storing unit 1122 stores function information informing vehicle function to be activated corresponding to each of the drivers, and the function activating unit 1124 activates a plurality of vehicle functions specified by the function information simultaneously.

The operation of the third embodiment of the authenticating apparatus 1100 will be described with reference to FIGS. 1 and 2, hereinafter.

When the driver accompanying with the electric license card 1010 approaches to the door, the first communicating unit 1111 allocated in the door of the vehicle transmits a predetermined signal. Note, the predetermined signal may be transmitted, when the driver touches the door or the doorknob of the vehicle, when the driver approaching to the door or reaching an area in the vicinity of the door is detected, or when the electric license card 1010 contacts with the door or a part in the vicinity of the door.

The electric license card 1010 transmits response signal corresponding to the predetermined signal to the authenticating apparatus 1100, when the electric license card 1010 receives the predetermined signal.

Then, the first communicating unit 1111 of the authenticating apparatus 1100 transmits a request signal requesting license card information, and receives license card information from the electric license card 1010.

The license card information transmitted from the electric license card 1010 is decoded at the code processing unit 1121 of the authenticating apparatus 1100, and is authenticated at the authenticating unit 1123 of the authenticating apparatus 1100.

When the license card information is correctly authenticated, the function activating unit 1124 referrers to vehicle information corresponding to the driver pre-stored in the storing unit 1122 of the authenticating apparatus 1100, and judges which of vehicle function is function to be activated.

When the electric license card 1010 correctly authenticated stores door unlocking information and engine starting information, the function activating unit 1124 of the authenticating apparatus 1100 activates the door unlocking apparatus 1021 and the engine controlling apparatus 1022, and the door unlocking apparatus 1021 unlocks the doors of the vehicle and the engine controlling apparatus 1022 starts the engine.

As described above, the third embodiment of the authenticating apparatus according to the present invention comprises a plurality of communicating units 1111, 1112, and 1113 communicating with the electric license card 1010 storing license card information including driver's identification information, an authenticating unit 1123 authenticating the license card information, an function activating unit 1124 activating vehicle function, and a storing unit 1122 storing function information corresponding to the license card information of every driver, and the function activating unit 1124 activates vehicle function corresponding to the function information stored in the correctly authenticated electric license card 1010.

Therefore, it is possible that the function activating unit 1124 activates the vehicle function specified by the function information when the license card information is correctly authenticated, and activates only vehicle functions corresponding to the driver because the function activating unit 1124 activates specified by the pre-stored function information,

Note, in the above-described embodiments 1 - 3, the vehicle function is assumed as door unlocking function and engine starting function, but this does not limit the present invention. The vehicle function may include other function.

For example, the authenticating apparatus 1100 may license an authenticated driver to use communicating function, when the vehicle equips a mobile phone to provide communication service through the mobile network.

The authenticating apparatus 1100 may license an authenticated driver to use a navigation system, when the vehicle equips a navigation system to provide navigation service.

Further, the authenticating apparatus 1100 may also authenticate to use an emergency report system by authenticating license card information.

In the first and second embodiments, a plurality of communicating units 1111, 1112, and 1113 transmit position information corresponding to the place where the communicating unit is allocated, but this is not limit the present invention.

In the above-described embodiments, the authenticating apparatus 1100 according to the present invention is mounted on a vehicle, but a vehicle may equip constitutional elements explained in the above-description to gain the same effect.

The above-described embodiments offer various kinds of effect, and can prevent a person who does not accompany with a license card or is not licensed from driving a vehicle, because a person without a license card is not authenticated.

It is possible to reduce traffic accidents by eliminating an accident-prone driver or a naive driver, because the authenticating apparatus can authenticate only a fair driver.

Further, the authenticating apparatus can improve security, because the license card information and function information are coded when transmitted.

### [Forth Embodiment]

In this embodiment, a storing unit 2130 (a storing means) means a storing unit included in the electric license card.

In this embodiment, a communicating unit 2110 (a communicating means) means a communicating unit included in the electric license card.

In this embodiment, a communicating unit 2210 means an in-vehicle communicating unit.

In this embodiment, a storing unit 2230 means an in-vehicle storing unit.

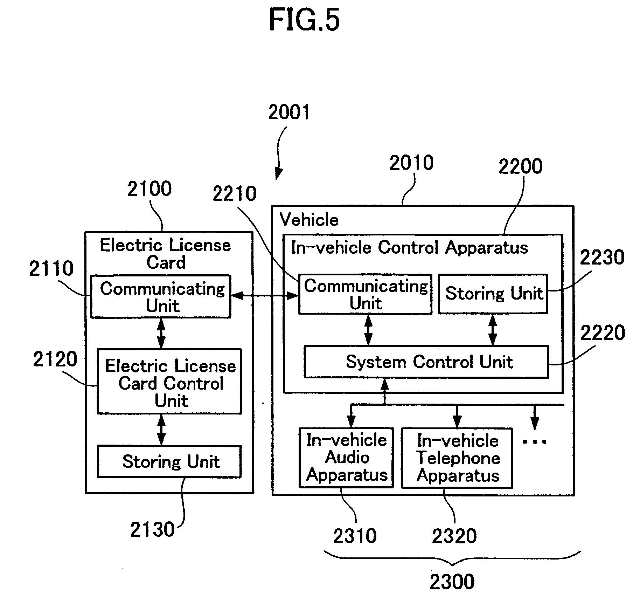

As shown in FIG 5, an electric license card system 2001 of the fourth embodiment comprises a portable electric license card 2100 storing information of at least one license card, an in-vehicle control apparatus 2200 mounted on a vehicle 2010, and in-vehicle apparatuses 2300 such as an audio apparatus.

The electric license card 2100 comprises a storing unit 2130 (a storing means) storing information of at least one license card, a communicating unit 2110 (a communicating means) transmitting the license card information outward, and an electric license card control unit 2120 controlling internal apparatuses included in the electric license card 2100, such as the communicating unit 2110, the storing unit 2130, and a like.

The in-vehicle control apparatus 2200 comprises a communicating unit 2210 (a communicating means) receiving information transmitted from the communicating unit 2110 of the electric license card 2100, a storing unit 2230 (a storing means) capable of writing and reading, a system control unit 2220 controlling the communicating unit 2210, the storing unit 2230, a system control unit 2220 controlling communicating of information through an information input and output apparatus (not shown) and in-vehicle apparatuses 2300.

The in-vehicle apparatuses 2300 include an in-vehicle audio apparatus 2310, an in-vehicle telephone apparatus 2320, etc., and are connected to the system control unit 2220.

Note, these in-vehicle apparatuses are constructed so as to be activated only when the license card information is authenticated.

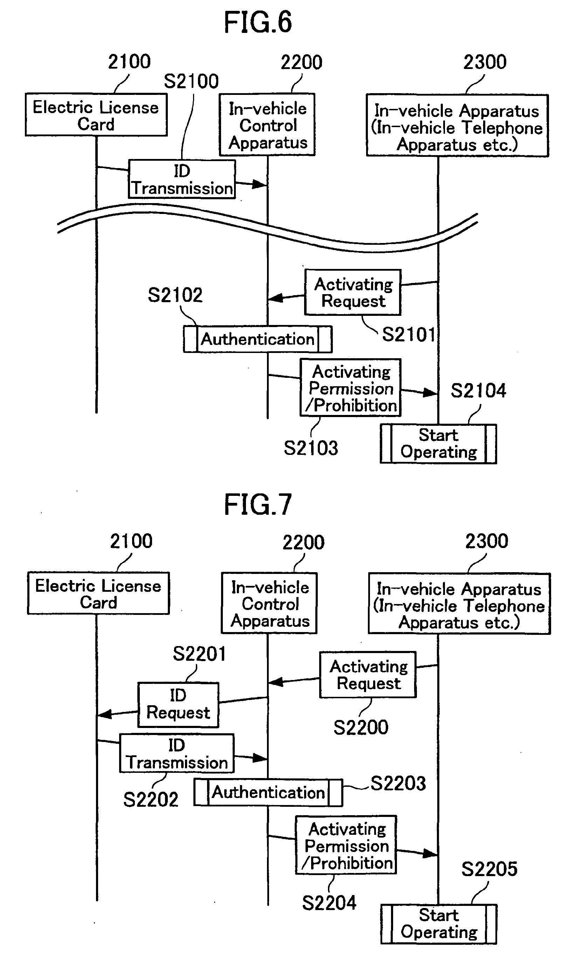

The operation of the forth embodiment of the electric license card system 2001 will be described with reference to FIG 6, hereinafter.

Firstly, the electric license card 2100 communicates with the vehicle 2010. This communicating is activated, when the doors are unlocked, or the electric license card 2100 is placed on a holder allocated in the vehicle.

By this communicating, driver's identification information and function information designating vehicle function to be activated are transmitted from the electric license card 2100 to the communicating unit 2210 in the in-vehicle control apparatus 2200 (S2100).

The in-vehicle control apparatus 2200 stores the driver's identification information and the function information to the in-vehicle apparatuses 2300 in the storing unit 2230.

The driver's identification information and the function information to the in-vehicle apparatuses 2300 stored in the storing unit 2230 are maintained until the electric license card 2100 is carried out from the vehicle.

When activating the in-vehicle apparatuses 2300, the in-vehicle apparatuses 2300 issue activating request to the in-vehicle control apparatus 2200 (S2101).

The in-vehicle control apparatus 2200 (an in-vehicle system controlling means) confirms whether or not the information from the electric license card 2100 exists by verifying data stored in the storing unit 2230 to response the above authenticating request.

When confirming that the electric license card 2100 does not exist, the in-vehicle control apparatus 2200 asks a person who intends to activate the in-vehicle apparatuses 2300 to transmit the license card information to obtain the information from the electric license card.

The above asking may be transmitted by audible message though the in-vehicle audio apparatus.

On the other hand, when confirming that the electric license card 2100 exists, the in-vehicle control apparatus 2200 determines whether or not the in-vehicle apparatuses issuing authenticating request are available to be activated by comparing function information from the electric license card 2100 with information from the in-vehicle apparatuses issuing authenticating request (S2102).

The in-vehicle control apparatus 2200 transmits determining result as activating permission information or activating prohibition information to the in-vehicle apparatuses 2300 (S2103), and the in-vehicle apparatuses start their operation in accordance with the determining result (S2104).

That is, when the determining result is activating permission information, the in-vehicle apparatuses 2300 are activated, and control various elements.

On the other hand, when the determining result is activating prohibition information, the in-vehicle apparatuses 2300 are prohibited to operate.

As described above, the electric license card system 2001 of the fourth embodiment according to the present invention allows a person who is authorized to use the in-vehicle apparatuses by authenticating the function information to the in-vehicle apparatus 2300 stored in the electric license card 2100, protects personal information stored in the in-vehicle apparatuses 2300, and can discourage theft.

### [Fifth Embodiment]

In this embodiment, a communicating unit 2110 means a communicating apparatus included in the license card.

In this embodiment, a communicating unit 2210 means a communicating unit included in the authenticating apparatus.

In this embodiment, a storing unit 2130 means a storing apparatus included in the license card.

The operation of the fifth embodiment of the electric license card system 2001 will be described, hereinafter.

The fifth embodiment of the electric license card system basically has the same construction as the forth embodiment 2001 shown in FIG 5, but the communicating unit 2110 of the electric license card and the communicating unit 2210 of the in-vehicle control apparatus of the present embodiment are of bi-directional communicating type, though the communicating unit 2110 of the electric license card and the communicating unit 2210 of the in-vehicle control apparatus of the fourth embodiment are of one-way communicating type.

The operation of the fifth embodiment of the electric license card system will be described with reference to drawings, hereinafter.

Firstly, a case when the driver intends to use in-vehicle apparatuses 2300 will be described with reference to a time-chart shown in FIG 7.

When the driver intends to use the in-vehicle apparatuses 2300, the in-vehicle apparatuses 2300 issue activating request to the in-vehicle control apparatuses 2200 at first (S2200).

The in-vehicle control apparatus 2200 determines whether or not the electric license card 2100 exists in the vicinity of the vehicle. When the in-vehicle control apparatuses 2200 confirm existence of the electric license card 2100, the in-vehicle apparatuses 2300 issue activating request (ID request) to the electric license card 2100 (S2201).

On the other hand, when the in-vehicle control apparatuses 2200 confirms no existence of the electric license card 2100, the in-vehicle control apparatus 2200 issues a message of no-existence of the electric license card 2100 to the user of the in-vehicle apparatuses 2300 by using the in-vehicle audio apparatus.

The electric license card 2100 transmits function information to activate the in-vehicle apparatuses stored in the storing unit 2130 as authenticating request information, when the electric license card control unit 2120 responses the ID request (S2202).

The in-vehicle control apparatus 2200 carries authenticating based on gathered information such as the function information (S2203).

The in-vehicle control apparatus 2200 issues activating permission or activating prohibition to the in-vehicle apparatuses 2300 according to authenticating result (S2204). The in-vehicle apparatuses start operation according to authenticating result (S2205).

That is, if the authenticating result is activating permission, the in-vehicle apparatuses 2300 are activated to control various equipments. On the other hand, if the authenticating result is activating prohibition, the in-vehicle apparatuses 2300 are not activated.

As described above, the electric license card system 2100 of the fifth embodiment authenticates the function information based on information stored in the electric license card 2100, and activates the in-vehicle apparatuses 2300 when activating request for activating the in-vehicle apparatuses 2300 is issued.

The electric license card system 2100 of the fifth embodiment can protect the personal information stored in the in-vehicle control apparatuses securer than the forth embodiment, improve convenience by regular authenticating, and secure the vehicle to discourage theft.

Operation to indicate authenticating result to a user who intends to use the in-vehicle apparatuses 2300 when the user reserves activating of the in-vehicle apparatuses 2300 in the fifth embodiment, will be described.

When activating request is issued, the in-vehicle control apparatus executes 2200 activating request authenticating process by communicating with the electric license card 2100 the same as the above described.

When activating permission of using the in-vehicle apparatuses 2300 is issued after authenticating, the in-vehicle control apparatus 2200 transmits reserving information of using the in-vehicle apparatuses 2300 to the electric license card 2100.

By receiving this information, the electric license card 2100 can inform completion of reserving to the owner of the electric license card 2100 with alarm sound or lump flickering.

Operation to indicate completion of reserving to a user who intends to use the in-vehicle apparatuses 2300 when the user reserves activating of the in-vehicle apparatuses 2300 in the fifth embodiment, will be described.

When activating request is issued, the in-vehicle control apparatus executes 2200 activating request authenticating process by communicating with the electric license card 2100 the same as the above described.

When activating permission of using the in-vehicle apparatuses 2300 is issued after authenticating, the in-vehicle control apparatus 2200 issues activating permission to the in-vehicle apparatuses 2300.

The in-vehicle control apparatus 2200 receives starting information when the in-vehicle apparatuses 2300 are activated, and transmits information of being activated the in-vehicle apparatuses 2300.

This information is indicated with alarm sound or lump flicking.

As above described, a person who intends to use the in-vehicle apparatuses 2300 can acknowledge completion of reserving, and can start using the in-vehicle apparatuses 2300.

### [Sixth Embodiment]

The electric license card of the sixth embodiment will be described, hereinafter.

This electric license card system permits or prohibits an in-vehicle telephone system.

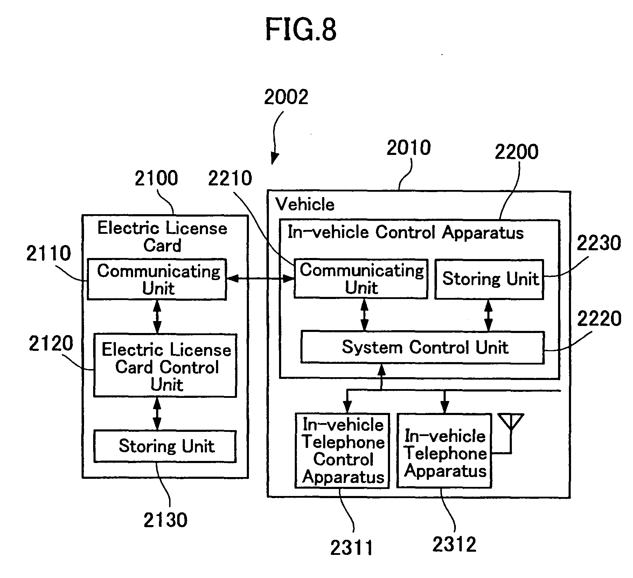

As shown in FIG 8, the electric license card system 2002 provides an in-vehicle telephone control apparatus 2311 with a man-machine interface and an in-vehicle telephone apparatus 2312 for communicating with external person differing from the bi-directional electric license card system 2001 shown in FIG 5.

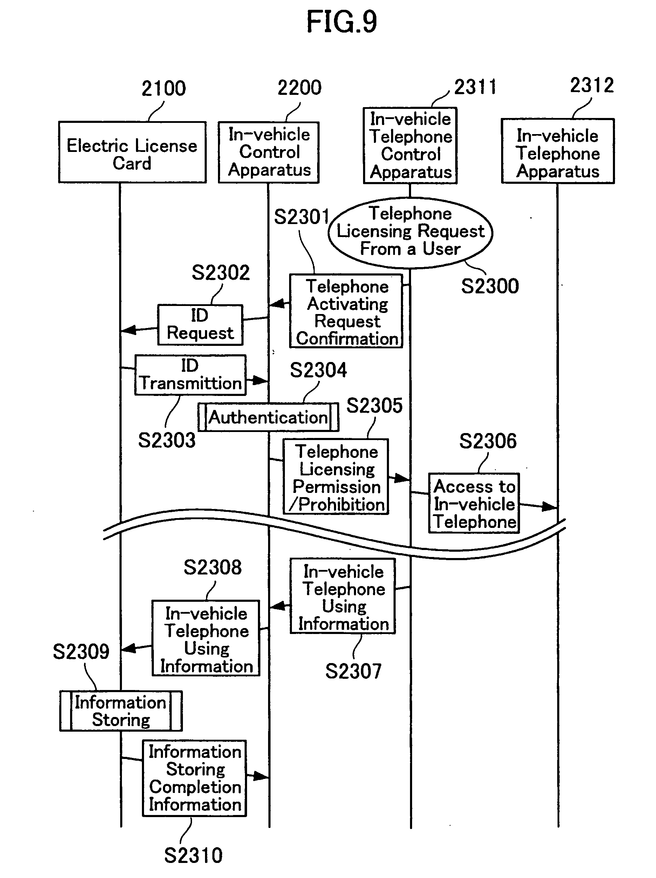

The operation of the above embodiment of the electric license card system 2002 will be described with reference to FIG 9, hereinafter.

When an owner of the electric license card 2100 intends to use the in-vehicle telephone apparatus 2312 mounted in the vehicle, the owner issues request of using the in-vehicle telephone to the in-vehicle telephone control apparatus 2311 (S2300).

The in-vehicle telephone control apparatus 2311 confirms whether or not request of using the in-vehicle telephone 2312 is issued (S2301).

The in-vehicle control apparatus 2200 requests telephone activating request confirmation information (ID information) to the electric license card 2100 (S2302), and receives the ID information from the electric license card 2100 (S2303).

The in-vehicle control apparatus 2200 execute authenticating process based on the ID information (S2304).

The in-vehicle control apparatus transmits authenticating result as activating permission or activating prohibition to the in-vehicle telephone control apparatus 2311 (S2305).

Only when activating permission of the in-vehicle telephone apparatus 2312 is issued (S2306), the user can use the in-vehicle telephone apparatus 2312.

After completing use of the in-vehicle telephone apparatus 2312, the in-vehicle telephone control apparatus 2311 transmits using result information (for example, talk time, intended party, etc.) to the in-vehicle control apparatus 2200. The in-vehicle control apparatus 2200 transmits the using result information to the electric license card 2100 (S2308), and the electric license card 2100 records this information in the storing unit (S2309).

After completing to record the using result information, the electric license card 2100 transmits completing to record the using result information to the in-vehicle control apparatus 2200 (S2310).

As above described, the electric license card system 2002 according to the sixth embodiment can allow using of the in-vehicle telephone apparatus 2312 depending on the owner of the electric license card 2100, and can record the using result information on each of the electric license card 2100.

### [Seventh Embodiment]

The electric license card of the seventh embodiment will be described, hereinafter.

This electric license card system permits or prohibits an audio function (except announcing function for announcing audible message, when inhibiting from using other in-vehicle apparatuses or confirming the electric license card) of an in-vehicle audio system.

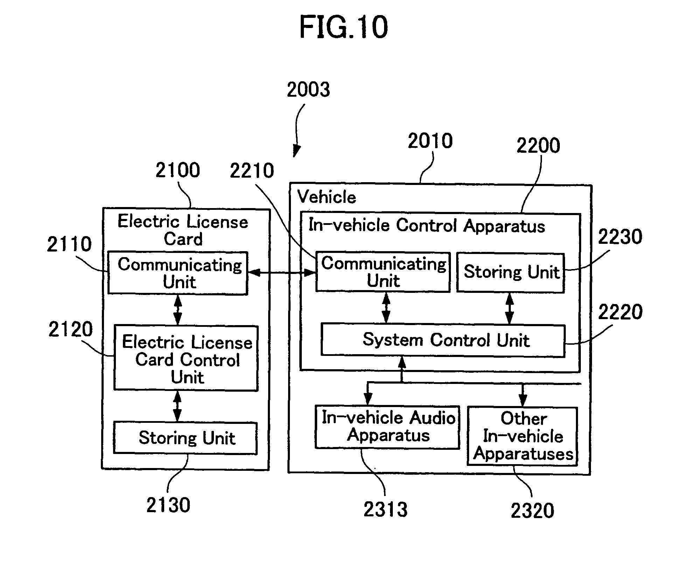

As shown in FIG. 10, the electric license card system 2003 provides an in-vehicle audio apparatus 2313 differing from the bi-directional electric license card system 2001 shown in FIG 5.

Note, in-vehicle apparatuses other than the in-vehicle audio apparatus 2313 may be mounted.

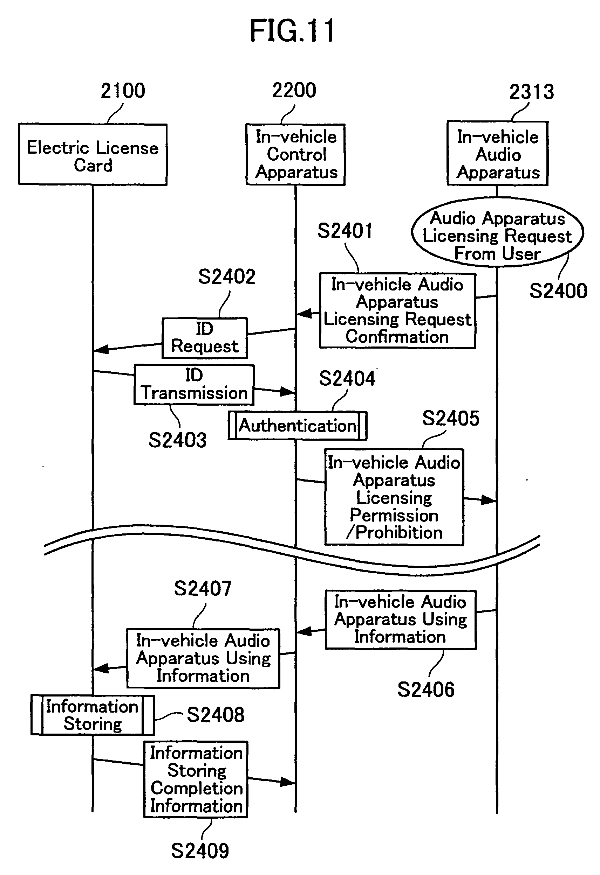

The operation of the above embodiment of the electric license card system 2003 will be described with reference to FIG 11, hereinafter.

When an owner of the electric license card 2100 intends to use the in-vehicle audio apparatus 2313 mounted in the vehicle, the owner issues request of using the in-vehicle telephone to the in-vehicle audio apparatus 2313 (S2400).
The in-vehicle audio apparatus 2313 confirms whether or not request of using the in-vehicle audio apparatus 2313 is issued (S2401).

The in-vehicle control apparatus 2200 requests audio activating request confirmation information (ID information) to the electric license card 2100 (S2402), and receives the ID information from the electric license card 2100 (S2403).

The in-vehicle control apparatus 2200 execute authenticating process based on the ID information (S2404).

The in-vehicle control apparatus transmits authenticating result as activating permission or activating prohibition to the in-vehicle audio apparatus 2313 (S2405).

Only when activating permission of the in-vehicle audio apparatus 2313 is issued (S2406), the user can use the in-vehicle audio apparatus 2313.

After completing use of the in-vehicle audio apparatus 2313, the in-vehicle audio apparatus 2313 transmits using result information (for example, information of radio frequency or music genre listened by the owner of the electric license card when driving the vehicle, information of titles and play sequence of CD or MD, etc.) to the in-vehicle control apparatus 2200.

The in-vehicle control apparatus 2200 transmits the using result information to the electric license card 2100 (S2407), and the electric license card 2100 records this information in the storing unit (S2408).

After completing to record the using result information, the electric license card 2100 transmits completing to record the using result information to the in-vehicle control apparatus 2200 (S2310).

As above described, the electric license card system 2003 according to the seventh embodiment can allow using of the in-vehicle audio apparatus 2313 depending on the owner of the electric license card 2100, and can record the using result information on each of the electric license card 2100 to customize the in-vehicle audio apparatus.

### [Eighth Embodiment]

The electric license card of the eighth embodiment will be described, hereinafter.

This electric license card system permits or prohibits an in-vehicle combination meter apparatus and a driving control apparatus.

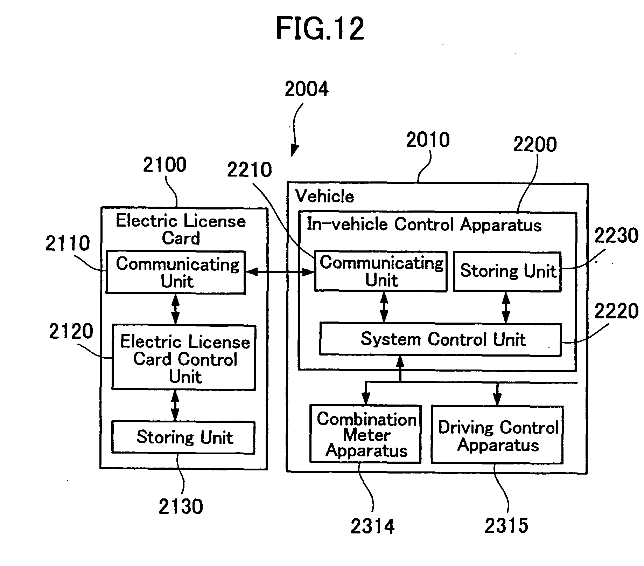

As shown in FIG. 12, the electric license card system 2004 provides a combination meter apparatus 2314 and a driving control apparatus 2315 differing from the bi-directional electric license card system 2001 shown in FIG 5.

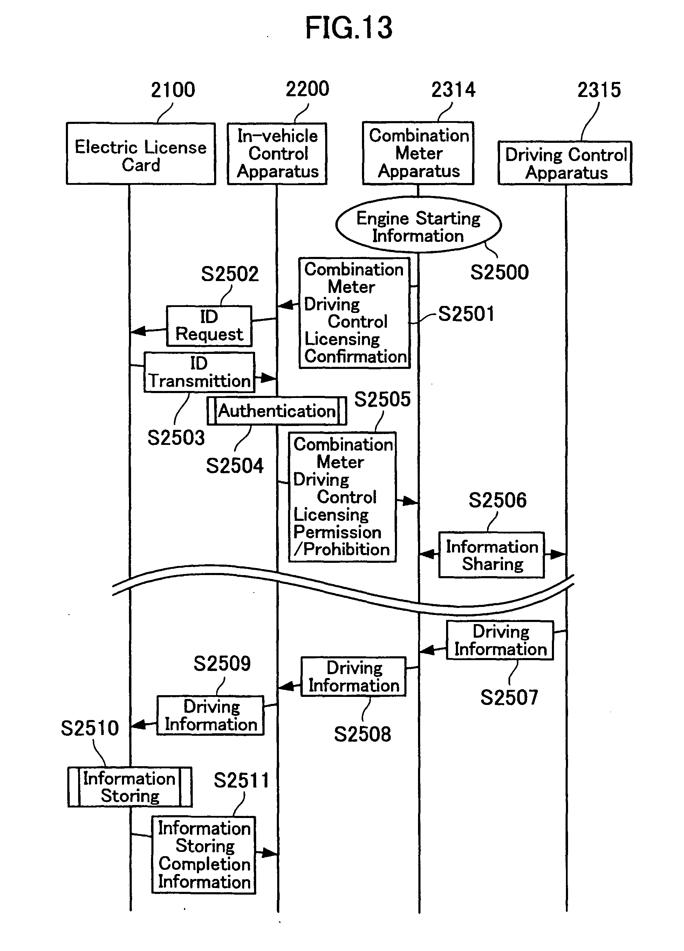

The operation of the above embodiment of the electric license card system 2004 will be described with reference to FIG 13, hereinafter.

When an owner of the electric license card 2100 starts an engine after riding on the vehicle, the combination meter apparatus 2314 recognizes starting of the engine (S2500), and confirms whether or not the in-vehicle control apparatus 2200 holds activating information of the combination meter apparatus 2314 and the driving control apparatus 2315 (S2501).

The in-vehicle control apparatus 2200 requests combination meter apparatus activating request confirmation information and driving control apparatus activating request confirmation information (ID information) to the electric license card 2100 (S2502), and receives the ID information from the electric license card 2100 (S2503).

The in-vehicle control apparatus 2200 execute authenticating process based on the ID information (S2504).

The in-vehicle control apparatus 2200 transmits authenticating result as activating permission or activating prohibition to the combination meter apparatus 2314 and the driving control apparatus 2315 (S2505).

Only when activating permission of the combination meter apparatus 2314 and the driving control apparatus 2315 is issued, the combination meter apparatus 2314 and the driving control apparatus 2315 can be used.

On the other hand, when activating prohibition of the combination meter apparatus 2314 and the driving control apparatus 2315 is issued, combination meter apparatus 2314 and the driving control apparatus 2315 cannot be used.

The above permission information or prohibition information are stored in both of the combination meter apparatus 2314 and the driving control apparatus 2315 (S2506) with driving information (for example, traveling distance, accelerating timing, braking timing, etc.).

When driving of the vehicle is completed, that is, when the engine is stopped, the driving control apparatus 2315 transmits driving information to the combination meter apparatus 2314 (S2507),

Further, the combination meter apparatus 2314 transmits the above updated information and the information previously stored in the combination meter apparatus 2314 to the in-vehicle control apparatus 2200 to record in the electric license card 2100 (S2508).

The in-vehicle control apparatus 2200 transmits these pieces of information to the electric license card 2100 (S2509), and the electric license card 2100 records these pieces of information (S2510). The electric license card 2100 transmits completing of record to the in-vehicle control apparatus 2200 to finish a sequence of processing.

As above described, the electric license card system 2004 according to the seventh embodiment can allow using of the combination meter apparatus 2314 and the driving control apparatus 2315 depending on the owner of the electric license card 2100.

Further, the electric license card system 2004 can record the driving information transmitted from the combination meter apparatus 2314 through the in-vehicle control apparatus in each of the electric license card 2100.

By using this embodiment, it is possible to omit a conventional odd-meter, and to store the traveling distance in the electric license card in order to generate reference information at next driving.

Further, it is also possible to manage operation of commercial vehicles by reading out the traveling distance of each vehicle with an adequate reading machine.

Moreover, it is possible to make driving secure as the driving control apparatus 2315 assists the driver's operation according to information of driving habit of the driver stored in the driving control apparatus depending on the driver.

It is also possible for a driver with less experience of driving a kind of vehicles safely to drive the vehicle by referring both of the information stored in the electric license card 2100 and the information stored in the driving control apparatus 2315, because the driving information can be applied to other kinds of vehicle.

### [Ninth Embodiment]

In this embodiment, an emergency report apparatus 2316 means an emergency report system.

The electric license card of the ninth embodiment will be described, hereinafter.

This electric license card system permits or prohibits an emergency repot apparatus.

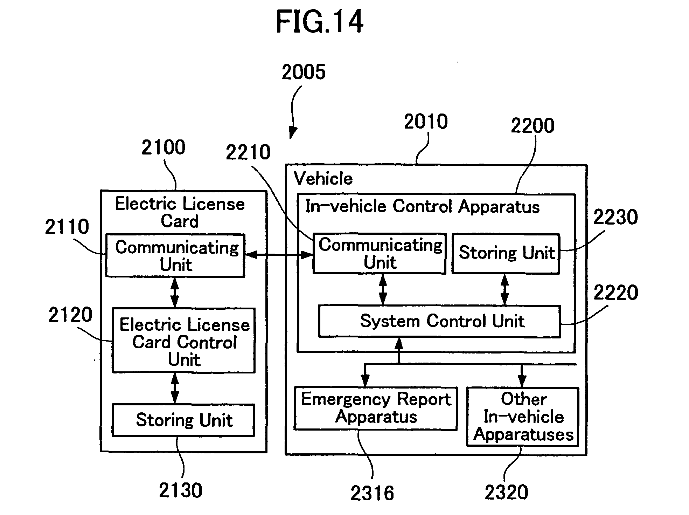

As shown in FIG 14, the electric license card system 2005 provides an emergency report apparatus 2316 and health information of the owner of the electric license card 2100 (for example, disease the owner presently has, hospital information of the hospital the owner presently goes to, blood type, etc,) is previously stored in the electric license card differing from the bi-directional electric license card system 2001 shown in FIG 5.

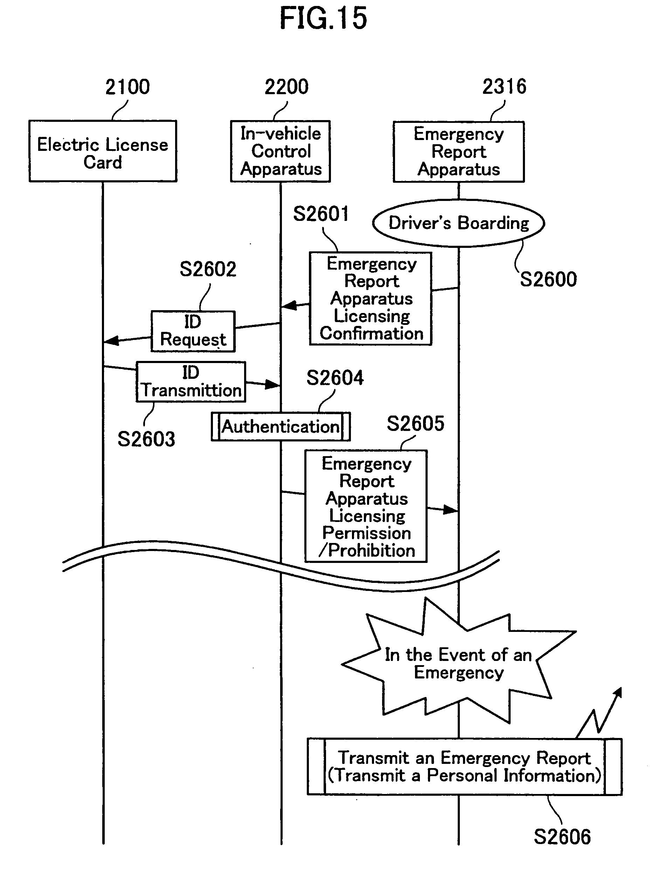

The operation of the above embodiment of the electric license card system 2005 will be described with reference to the time chart shown in FIG 15, hereinafter.

Firstly, when an owner of the electric license card 2100 rides on the vehicle (S2600), the emergency report apparatus 2316 confirms whether or not the in-vehicle control apparatus 2200 holds activating information of the emergency report apparatus 2316 (S2601).

The in-vehicle control apparatus 2200 asks emergency report apparatus activating information (ID information) to the electric license card 2100 (S2602), and executes authenticating process based on the ID information (S2604), after receiving the ID information and the driver's health information from the electric license card (S2603).

The in-vehicle control apparatus 2200 transmits authenticating result and health information of the owner of the electric license card 2100 received from the electric license card 2100 as activating permission or activating prohibition to the emergency report apparatus 2316 (S2605).

Only when activating permission of the emergency report apparatus 2316 is issued, the emergency report apparatus 2316 can be used.

When an accident such as a vehicle crash accident, physical ailment, etc., occurs, the emergency report system 2316 issues emergency report containing accident spot information and health information of the owner of the electric license card 2100 (S2606).

The emergency report contains not only health information of the owner of the electric license card 2100 (such as previous disease, a disease the driver presently has, blood type, medicine the driver takes, etc.), but also position information where the vehicle stops.

As above described, the electric license card system 2004 according to the ninth embodiment can transmit position information of the vehicle, emergency call and health information of the owner of the electric license card 2100 to an emergency center, when emergency physical ailment of the electric license card 2100 occurs.

It is possible to take adequate treatment for the owner of the electric license card 2100 by referring the health information of the owner of the electric license card 2100 on the way to the accident spot.

### [Tenth Embodiment]

In this embodiment, an in-vehicle unit of road-vehicle communication apparatus 2317 means a road-vehicle communication system mounted on a vehicle.

The electric license card of the tenth embodiment will be described, hereinafter.

This electric license card system permits or prohibits a road-vehicle communication system.

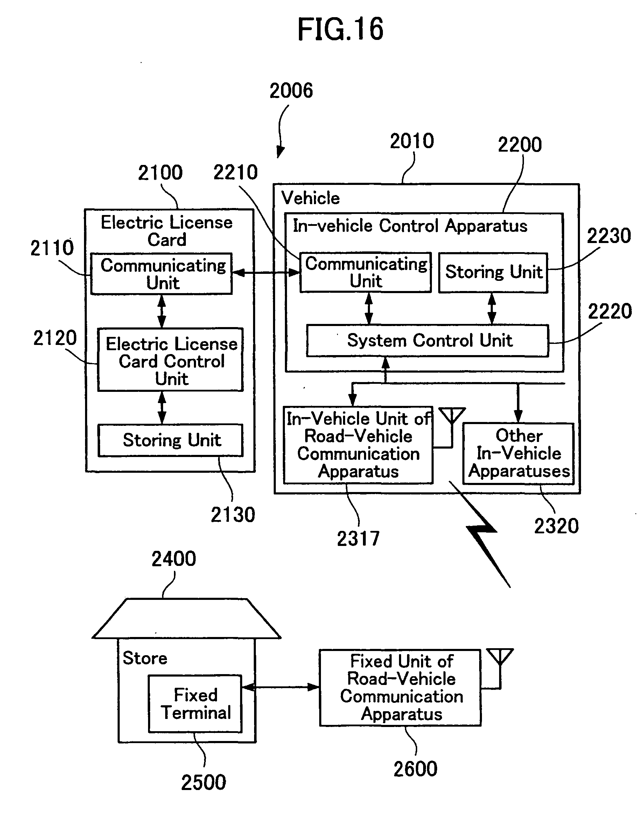

As shown in FIG 16, the electric license card system 2006 provides an in-vehicle unit of road-vehicle communication apparatus 2317 as an in-vehicle apparatus, and the in-vehicle unit of road-vehicle communication apparatus 2317 can communicate with a fixed terminal 2500 allocated in a store 2400 through a fixed unit of the road-vehicle communication apparatus 2600 differing from the bi-directional electric license card system 2001 shown in FIG 5.

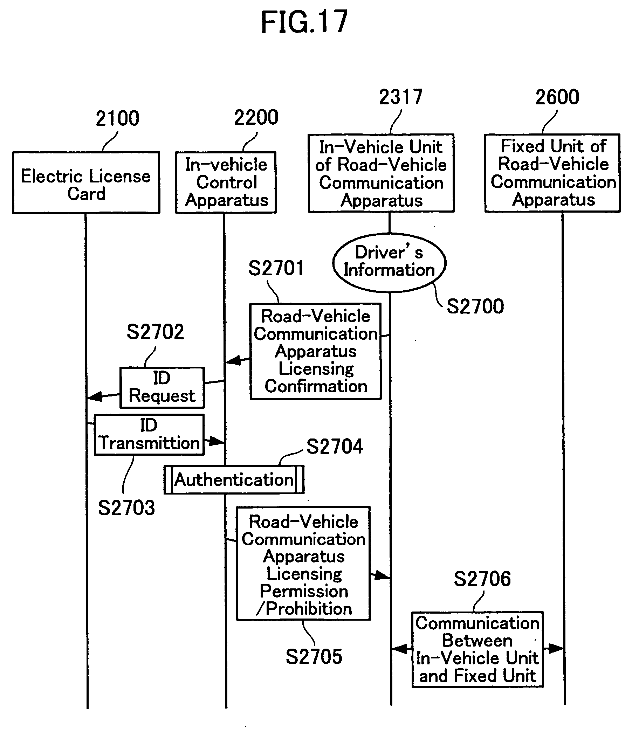

The operation of the above embodiment of the electric license card system 2006 will be described with reference to the time chart shown in FIG. 17, hereinafter.

Firstly, when an owner of the electric license card 2100 rides on the vehicle (S2700), the in-vehicle unit of road-vehicle communication apparatus 2317 confirms whether or not the in-vehicle control apparatus 2200 holds activating information of the in-vehicle unit of road-vehicle communication apparatus 2317 (S2701).

The in-vehicle control apparatus 2200 asks road-vehicle communication apparatus activating information (ID information) and driver's personal information to the electric license card 2100 (S2702), and executes authenticating process based on the ID information (S2704), after receiving the ID information and the driver's personal information from the electric license card (S2703).

The in-vehicle control apparatus 2200 transmits authenticating result and the driver's personal information as activating permission or activating prohibition to the in-vehicle unit of road-vehicle communication apparatus 2317 (S2705).
Only when activating permission of the in-vehicle unit of road-vehicle communication apparatus 2317 is issued, the in-vehicle unit of road-vehicle communication apparatus 2317 can be used (S2706).

Then, merchants in a store 2400 can refer to shopping record of a customer with the electric license card 2100, stored when the customer has previously gone to shopping, and can provide better service to the customer.

As above described, the electric license card system 2006 according to the tenth embodiment allows for the owner of the driver's certificate conveniently to use the road-vehicle communication system.

The electric license card system 2006 can store shopping information at a drive through store, and vehicle inspection information, vehicle failure information, and vehicle maintenance information at a dealer in the electric license card 2100. Further, information stored in the in-vehicle unit can easily and securely be transmitted out of the vehicle by using the road-vehicle communication system.

### [Eleventh Embodiment]

The electric license card of the eleventh embodiment will be described, hereinafter.

This electric license card system allows to set a plurality of activating information for activating the in-vehicle apparatuses corresponding to a plurality of electric license cards.

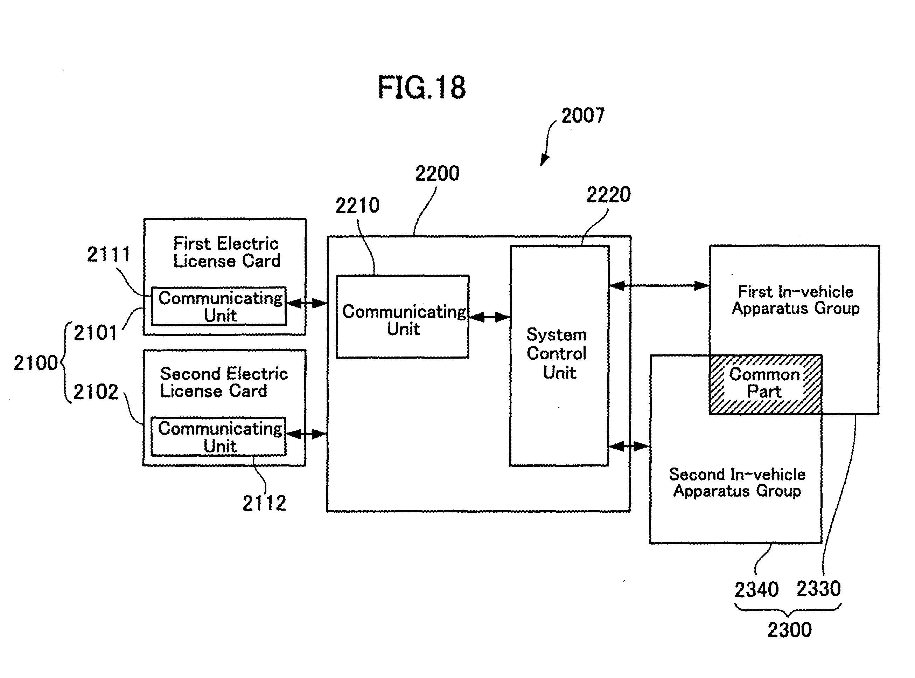

As shown in FIG 18, the electric license card system 2007 provides a plurality of electric license cards including a first electric license card 2101, and a second electric license card 2102, and a plurality of groups of in-vehicle apparatuses including a first in-vehicle apparatus group 2330 and a second in-vehicle apparatus group 2340, differing from the bi-directional electric license card system 2001 shown in FIG. 5.

Note, the first electric license card 2101, and the second electric license card 2102 provide a first communicating unit 2111 (first communicating means) and a second communicating unit 2112 (second communicating means) respectively, and other units such as storing units not shown in FIG. 18.

The first electric license card 2101, and the second electric license card 2102 store activating information for activating the in-vehicle apparatuses in the storing units corresponding to the electric license cards.
In this embodiment, the first in-vehicle apparatus group 2330 and the second in-vehicle apparatus group 2340 contain common in-vehicle apparatuses.

The electric license card control units of the first electric license card 2101 and the second electric license card 2102 are not shown in this figure.

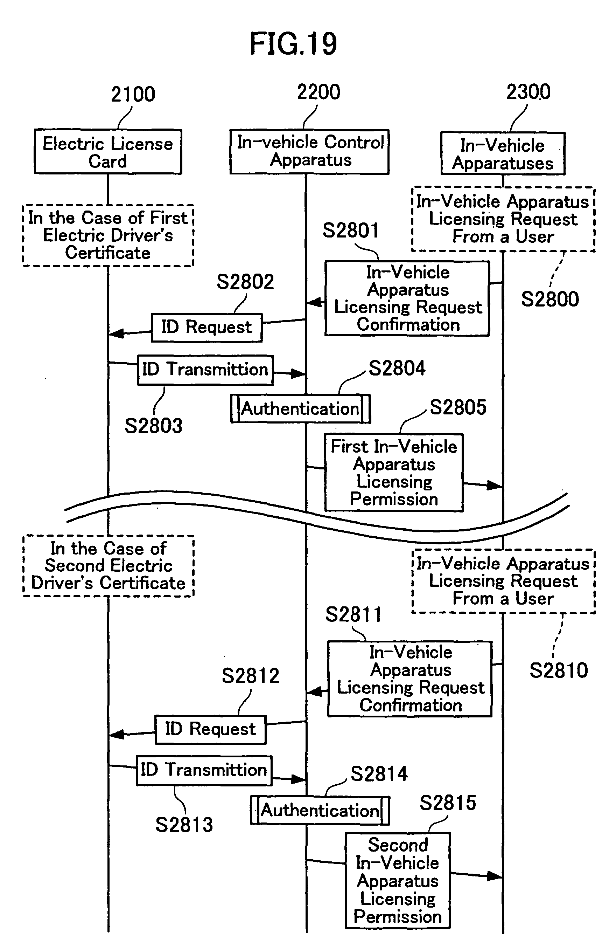

The operation of the eleventh embodiment of the electric license card system 2007 will be described with reference to the time chart shown in FIG 19, hereinafter.

When the driver with the first electric license card 2101 intends to use at least one of the in-vehicle apparatuses belonging to the first in-vehicle apparatus group 2330 (S2800), the first in-vehicle apparatus group 2330 asks whether or not the in-vehicle control apparatus 2200 holds activating information of the first in-vehicle apparatus group 2330 (S2801).

The in-vehicle control apparatus 2200 asks whether or not the first electric license card 2101 stores the first group of in-vehicle apparatus activating information (ID information) (S2802) responding to the above asking.

The first electric license card 2101 transmits the ID information registered in the first electric license card 2101 to the in-vehicle control apparatus 2200 to respond the asking (S2803).

The in-vehicle control apparatus 2200 executes authenticating process based on the information transmitted from the first electric license card 2101 (S2804), and transmits activating information to the first in-vehicle apparatus group 2330 to activate at least one of the first in-vehicle apparatus group 2330 based on the ID information registered in the first electric license card 2101 (S2805).

The first in-vehicle apparatus group 2330 receives the activating information, and activates the only in-vehicle apparatuses belonging to the first group.

When the driver with the second electric license card 2102 intends to use at least one of the in-vehicle apparatuses belonging to the second in-vehicle apparatus group 2340 (S2810), the second in-vehicle apparatus group 2340 asks whether or not the in-vehicle control apparatus 2200 holds activating information of the second in-vehicle apparatus group 2340 as described above (S2811).

The in-vehicle control apparatus 2200 again asks whether or not the second electric license card 2102 stores the second group of in-vehicle apparatus activating information of the second group of in-vehicle apparatuses (ID information) (S2812).

The second electric license card 2102 transmits the ID information registered in the second electric license card 2102 to the in-vehicle control apparatus 2200 to respond the asking (S2813).

The in-vehicle control apparatus 2200 executes authenticating process based on the information transmitted from the second electric license card 2102 (S2814), and transmits activating information to the second in-vehicle apparatus group 2340 to activate at least one of the second in-vehicle apparatus group 2340 based on the ID information registered in the second electric license card 2102 (S2815).

The second in-vehicle apparatus group 2340 receives the activating information, and activates the only in-vehicle apparatuses belonging to the second in-vehicle apparatus group 2340.

As described above, the electric license card 2007 according to the eleventh embodiment, can store a plurality of activating information of the in-vehicle apparatuses 2300 (the first in-vehicle apparatus group 2330 and the second in-vehicle apparatus group 2340) in each of the electric license cards (the first electric license card 2101, and the second electric license card 2102).

Therefore, it is possible to customize the electric license card system by issuing activating information of the in-vehicle apparatuses 2300 corresponding to the electric license card 2100.

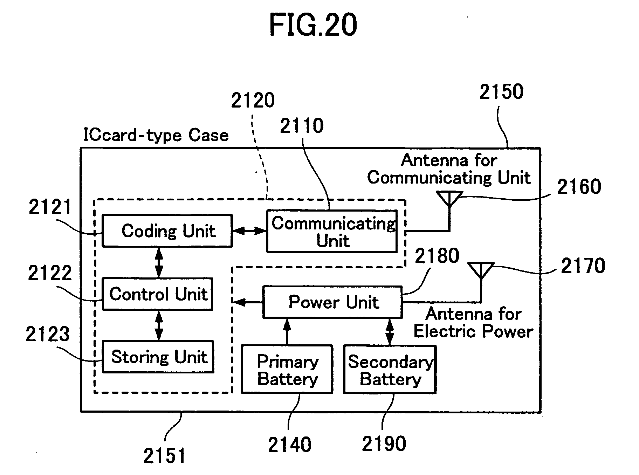

The case that the electric license card 2100 used in the above-described embodiment of the electric license card system is of a non-contact IC card type, will be described with reference to FIG 20, hereinafter.

As shown in FIG 20, the non-contact IC card type license card 2150 comprises a control unit 2122 of controlling each of units contained in the non-contact IC card type license card 2150, a read and write storing unit (storing means) 2123, a coding unit 2121 to secure inputting and outputting of information, a communicating unit 2110 of communicating information with external system, an antenna for communicating unit 2160, a power unit 2180 of powering the non-contact IC card type license card 2150, a primary battery 2140 for backing up data, a secondary battery 2190 for normal operation, an antenna for electric power 2170 for the non-contact IC card type license card 2150 from the outside, and is contained an IC card-type case 2151.

As constructed above, it is possible that the non-contact IC card type license card 2150 wirelessly can communicate information with the external apparatuses (for example, the in-vehicle control apparatus 2200), and can be wirelessly powered by high-frequency AC electric power with the power unit 2180 of regulating AC power and the secondary battery 2190.

The electric license card control unit 2120 comprising the control unit 2122, the coding unit 2121, and the communicating unit 2110 are wirelessly powered.

The non-contact IC card type license card 2150 can be constructed as a completely on-contact type without electrical contacts for connecting with the external apparatuses.

### [Twelfth Embodiment]

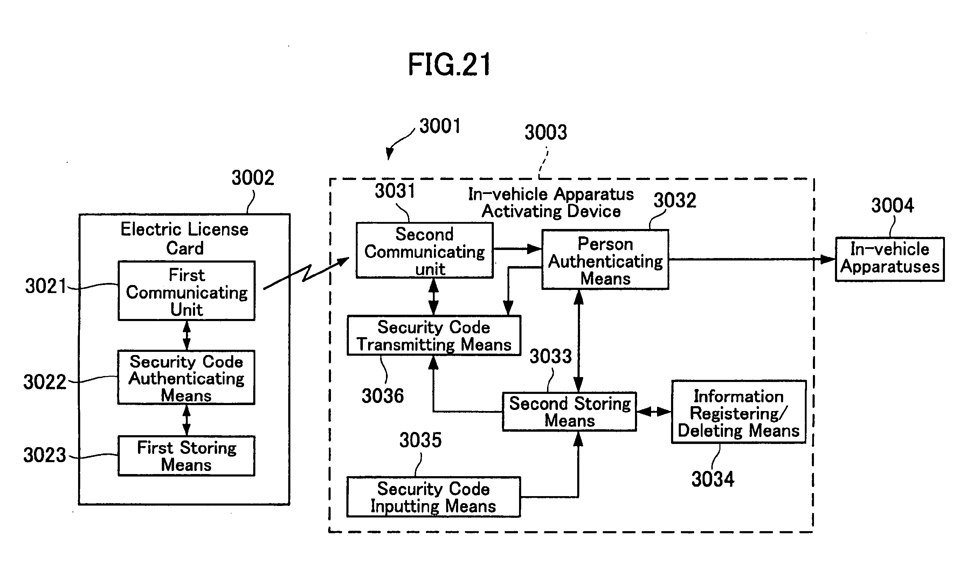

The authenticating system for in-vehicle apparatus activating system according to the twelfth embodiment is shown in FIG 21.

In this embodiment, in-vehicle apparatuses 3004 mean a various kinds of apparatuses mounted on the vehicle.

In this embodiment, a first communicating unit 3021 means a communicating unit contained in a license card.

In this embodiment, a security code authenticating means 3022 means a security code authenticating unit.

In this embodiment, a first storing means 3023 means a storing unit contained in the license card.

In this embodiment, a second communicating unit 3031 means a communicating unit mounted on the in-vehicle apparatus activating device.

In this embodiment, a person authenticating means 3032 means a person authenticating unit.

In this embodiment, a second storing means 3033 means a storing unit mounted on the in-vehicle apparatus activating device.

In this embodiment, a security code inputting means 3035 means a security code inputting unit.

In this embodiment, a security code transmitting means 3036 means a security code transmitting means 3036.

A twelfth embodiment of an authenticating system according to the present invention comprises an electric license card of outputting personal information only when the security code inputted from the outside, and an in-vehicle authenticating device of communicating with the electric license card, registering a security code inputted by s user and a personal information transmitted from the electric license card when the security code is correctly inputted, transmitting a plurality of the security codes sequentially until one of the security codes is authenticated in the electric license card, verifying every personal information transmitted from the electric license card with one of registered personal information, and authenticating to activate the in-vehicle apparatuses.

In FIG 21, the in-vehicle apparatus activating information authenticating system 3001 comprises an electric license card 3002 of outputting internally stored driver's personal information, an in-vehicle apparatus activating device 3003 of transmitting an internally stored security code for activating the in-vehicle apparatuses sequentially, and activating the in-vehicle apparatuses 3004 if a personal information transmitted from the electric license card is authenticated based on the registered personal information when the electric license card 3002 authenticates the security code.

The electric license card 3002 comprises a first communicating unit 3021 of communicating with the in-vehicle apparatus activating device 3003, a first storing means 3023 of storing driver's personal information and a security code to find the driver's personal information, a security code authenticating means 3022 of permitting to transmit registered driver's personal information from the first communicating unit 3021 to the first storing means 3023 when the security code stored in the first storing means 3023 agrees with the security code received by the first communicating unit 3021, and prohibiting to transmit registered driver's personal information from the first communicating unit 3021 to the first storing means 3023 when the security code stored in the first storing means 3023 does not agree with the security code received by the first communicating unit 3021.

The in-vehicle apparatus activating device 3003 comprises a second communicating unit 3031 of communicating with the first communicating unit 3021 of the electric license card, a second storing means of storing security code and personal information, a security code inputting means 3053 of inputting security code, an information registering/deleting means 3034 of registering security code inputted from the security code inputting means 3035 and personal information corresponding to the security code read out from the electric license card 3002 in the second storing means 3033, and of deleting security code and personal information registered in the second storing means 3033, a security code transmitting means 3036 of sequentially transmitting a plurality of security codes registered in the second storing means 3033 to the first communicating unit 3021 through the second communicating means before starting communicating with the electric license card 3002 until one of the security codes is authenticated by the security code authenticating means of the electric license card 3002, and a person authenticating means 3032 of activating the in-vehicle apparatuses 3004 when the personal information received by the second communicating unit 3031 is authenticated based on the personal information registered in the second storing means 3033.

Note, the second communicating unit 3031 of the in-vehicle apparatus activating device 3003 is arranged, for example, on the instrument panel in front of the driver seat, and is constructed to communicate with the first communicating unit 3021 when the electric license card.

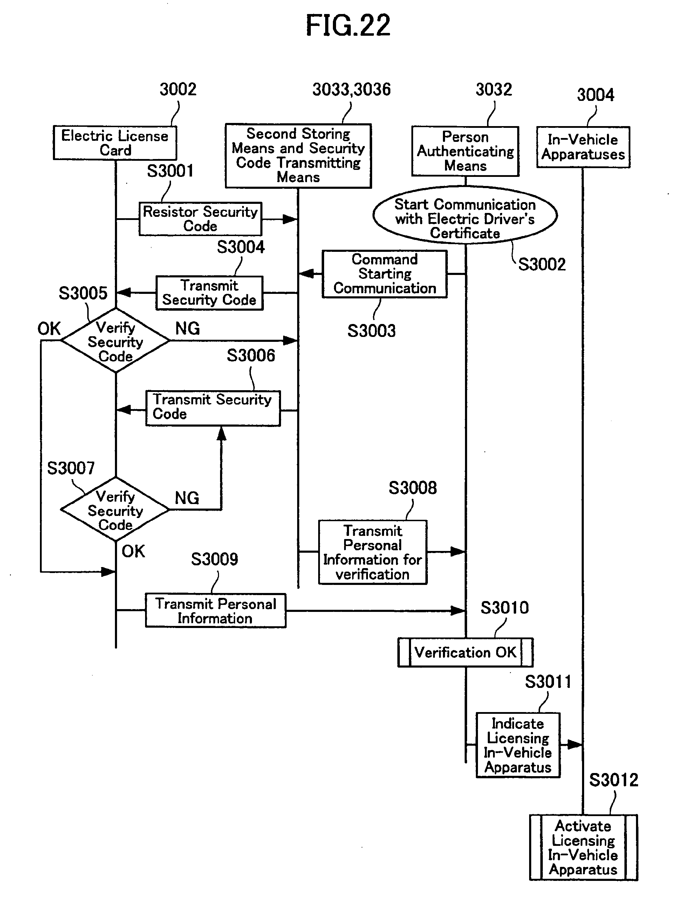

The operation of the in-vehicle apparatus activating information authenticating system 3001 constructed above is described with reference to the time chart of FIG 22, hereinafter.

Firstly, a security code to activate the in-vehicle apparatuses 3004 is registered in the second storing means 3033 of the in-vehicle apparatus activating device 3003 (S3001).

The security code is registered in the second storing means 3033, when the user inputs the security code for activating the in-vehicle apparatuses 3004 from the security code inputting means 3035.

After registering the security code, the security code is transmitted from the second communicating unit 3031 to the electric license card 3002, personal information stored in the first storing means 3023 and transmitted from the first communicating unit 3021 under authenticating of the electric license card 3002 is received by the information registering/deleting means 3034, and is stored as authenticating personal information in the second storing means 3033 with the corresponding security code

The security code is registered corresponding to each of persons who intend to use the in-vehicle apparatuses 3004.

Note, the kinds of the in-vehicle apparatuses 3004 may be different in accordance with the user.

When a user who intends to use at least one of the in-vehicle apparatuses 3004 brings the electric license card 3002 to the second communicating unit 3031, after completing the above registering, the person authenticating means 3032 detects the second communicating unit 3031, and starts to transmit the security code stored in the second storing means 3033 to the electric license card 3002 (S3002) by activating the security code transmitting means 3036 (S3003).

The security code stored in the second storing means 3033 is read out by the security code transmitting means 3036, and transmitted from the second communicating unit 3031 to the first transmitting means of the electric license card (S3004).

The security code authenticating means 3022 of the electric license card 3002 authenticates the security code received by the first communicating means 3023 based on the security code read out from the first storing means 3023 (S3005).

When the security code received by the first communicating means 3023 is not authenticated, the information of being not authenticated is transmitted from the first communicating unit 3021 to the second communicating unit 3031.

When the security code transmitting means 3036 receives this information, the security code transmitting means 3036 reads out the following security code from the second storing means 3033, and the following security code is transmitted from the second communicating unit 3031 to the first communicating unit 3021.

Security code transmitting by the security code transmitting means 3036 is continued, until the security code authenticating means 3022 of the electric license card 3002 authenticates one of the security codes (S3006).

The electric license card 3002 authenticates every security code using the security code transmitting means 3036 (S3007).

The security code transmitting means 3036 verifies one of security codes (S3005 and S3007), and authenticating information is transmitted from the first communicating unit 3021 to the second communicating unit 3031, when the security code transmitting means 3036 authenticates the security code.

When the security code transmitting means 3036 receives the authenticating information, the security code transmitting means 3036 stops further transmitting of security code, the person authenticating means 3032 orders the second storing means 3033 to transmit personal information for authenticating corresponding to the security code to the person authenticating means 3032 (S3008).

The electric license card 3002 transmits the personal information stored in the first storing means 3023 to the second communicating unit 3031, and the personal information is stored in the personal authenticating means (S3009).

The steps from S3007 to S3009 is ones that the reference personal information is read out from the second storing means 3033, and the personal information for authenticating is transmitted from the first communicating unit 3021 when the authenticating information is issued.

These steps, however, may be ones that the first communicating unit 3021 orders the second communicating unit 3031 to transmit from the beginning when the security code is authenticated by the security code authenticating means 3022, and the security code authenticating means 3022 orders the second storing means 3033 to transmit the reference personal information after completing of authenticating the security code.

The person authenticating means 3032 compares the personal information transmitted from the electric license card 3002 with the reference personal information read out from the second storing means 3033. When the transmitted personal information is authenticated (S3010), the person authenticating means 3032 issues activating information for activating the in-vehicle apparatuses 3004 to the in-vehicle apparatuses 3004 (S3011).

The in-vehicle apparatuses 3004 that receives the activating information turn into stand-by state (S3012).

Though being omitted in FIG 22, the in-vehicle apparatuses 3004 keep stopping state when the personal information is not authenticated at S3010, because the person authenticating means 3032 does not issue the activating information.

As described above, the in-vehicle apparatus activating information authenticating system 3001 according to the twelfth embodiment can obtain the personal information from the electric license card, when the electric license card does not output the personal information so long as the security code is not inputted, and registers the personal information as a piece of reference personal information.

Then, the in-vehicle apparatus activating information authenticating system 3001 according to the twelfth embodiment can activate the in-vehicle apparatuses when a piece of personal information transmitted from the electric license card is authenticated based on the reference personal information.

### [Thirteenth Embodiment]

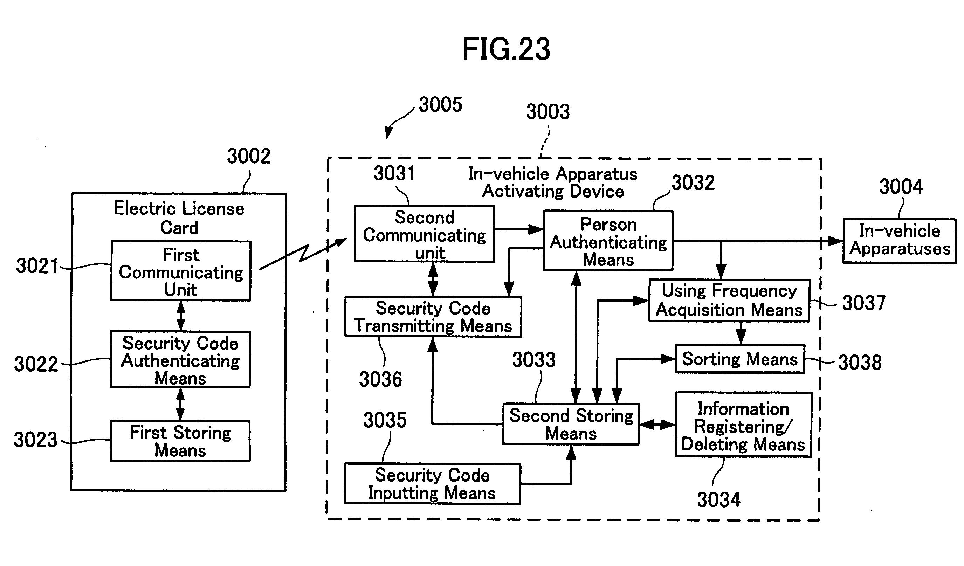

The authenticating system for in-vehicle apparatus activating information authenticating system 3005 according to the twelfth embodiment is shown in FIG 23.

In this embodiment, the first communicating unit 3021 means the communicating unit contained in the electric license card.

In this embodiment, the security code authenticating means 3022 means the security code authenticating unit.

In this embodiment, the first storing means 3023 means the storing unit contained in the electric license card.

In this embodiment, the second communicating unit 3031 means the communicating unit mounted on the authenticating system for in-vehicle apparatus activating device.

In this embodiment, the person authenticating means 3032 means the person authenticating unit.

In this embodiment, the second storing means 3033 means the storing unit mounted on the authenticating system for in-vehicle apparatus activating device.

In this embodiment, the security code transmitting means 3036 means the security code transmitting unit.

In this embodiment, the using frequency acquisition means 3037 means the using frequency information acquisition unit.

The authenticating system for in-vehicle apparatus activating information authenticating system 3005 shown in FIG 23 further contains the using frequency acquisition means 3037 of acquiring using frequency information informing using frequency of the in-vehicle apparatuses 3004 for each driver in the second storing means 3033, and a sorting means 3038 of sorting the using frequency information stored in the second storing means 3033 in decreasing order, and storing the sorted using information with the corresponding security code.

The authenticating system for in-vehicle apparatus activating information authenticating system 3005 is constructed so that the security code transmitting means 3036 reads out a security code stored in the second storing means 3033 in decreasing order of the using frequency, and the second communicating unit 3031 transmits the read-out security code to the electric license card 3002 differing from the twelfth embodiment.

Because other constituent elements are the same as the twelfth embodiment of the in-vehicle apparatus activating information authenticating system 3001, the description of the other constituent elements is omitted by giving the same reference number as the twelfth embodiment.

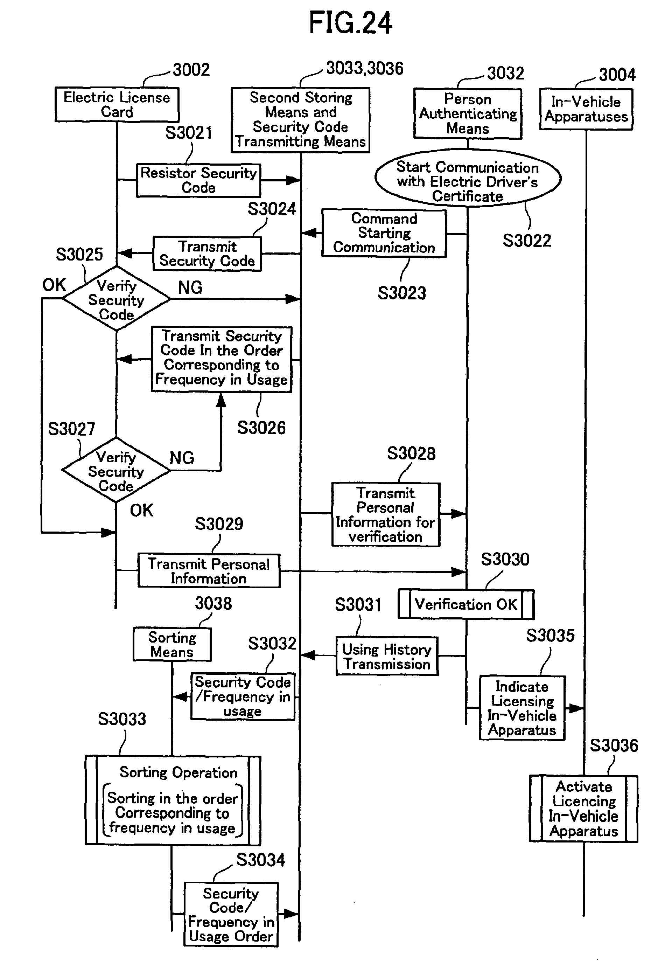

The operation of the authenticating system for in-vehicle apparatus activating information authenticating system 3005 described above will be explained with reference with the time-chart of FIG 24.

Registering the security code of a driver who intends to activate the in-vehicle apparatuses 3004 is executed the same process as S3001 of the time-chart shown in FIG 22 (S3021).

When a user brings the electric license card 3002 to the second communicating unit 3031, after completing the above registering, the person authenticating means 3032 detects the second communicating unit 3031, and starts to transmit the security code stored in the second storing means 3033 to the electric license card 3002 (S3022) by activating the security code transmitting means 3036 (S3023).

The security code transmitting means 3036 reads out the most frequently used security code stored in the second storing means 3033, and transmits the security code to the electric license card 3002 through the second communicating unit 3031 (S3024).

Note, if a security code registered in the second storing means 3033 has never been used, this security code is read out in accordance with a user's name in letter-by letter or in the order of registration.

The security code authenticating means 3022 of the electric license card 3002 authenticates the security code received by the first communicating unit 3021 based on security codes stored in the first storing means 3023 (S3025).

When the security code received by the first communicating unit 3021 is not authenticated, the first communicating unit 3021 transmits non-authenticating information to the second communicating unit 3031 of the in-vehicle apparatus activating device 3003.

When the second communicating unit 3031 receives the non-authenticating information, the security code transmitting means 3036 reads out the second-most frequently used security code stored in the second storing means 3033, and transmits the security code to the electric license card 3002 through the second communicating unit 3031 (S3026).

The security code authenticating means 3022 of the electric license card 3002 authenticates the security code newly received by the first communicating unit 3021 based on security codes stored in the first storing means 3022 (S3027).

When the security code received by the first communicating unit 3021 is not authenticated, the first communicating unit 3021 transmits non-authenticating information to the second communicating unit 3031 of the in-vehicle apparatus activating device 3003.
The in-vehicle apparatus activating device 3003 repeats to transmit the security codes in the order of using frequency, until the in-vehicle apparatus activating device 3003 receives authenticating information informing that the security code authenticating means 3022 authenticates the security code (S3025).

On the other hand, the security code authenticating means 3022 of the electric license card 3002 authenticates the security code received by the first communicating unit 3021, the first communicating unit 3021 transmits authenticating information to the second communicating unit 3031.

The security code transmitting means of the in-vehicle apparatus activating device 3003 stops to transmit further security codes the second storing means 3033 transmits a piece of personal information to the person authenticating means 3032 (S3028).

Further, the first communicating unit 3021 of the electric license card 3002 transmits a piece of personal information stored in the first storing means 3023 to the in-vehicle apparatus activating device 3003 (S3029).

The person authenticating means 3032 of the electric license card 3002 executes person authenticating as shown in the time chart of FIG 22. When the person authenticating means 3032 authenticates the person (S3030), the electric license card 3002 outputs in-vehicle apparatus activating information to the in-vehicle apparatuses 3004 (S3030), and allows the user to use the in-vehicle apparatuses 3004 (S3036).

Note, when the person authenticating means 3032 authenticates the person (S303), the person authenticating means 3032 of the using frequency acquisition means 3037 transmits personal using record informing the name of the user on the in-vehicle apparatuses 3004, the using date, etc. (S3031), and stores the personal using record in the second storing means to update the using frequency record.

When receiving the personal using record, the sorting means 3038 activated by the person authenticating means 3032 reads out security codes and the corresponding using frequencies stored in the second storing means 3033 (S3032), sorts the security codes in the decreasing order of the using frequencies (S3033), and stores the sorting result in the second storing means (S3033).

When the user who intends to use the in-vehicle apparatuses 3004 brings the electric license card 3002 close to the second communicating unit 3031 after completing the above process, the in-vehicle apparatus activating device 3003 transmits security codes to the electric license card 3002 in the using frequency decreasing order sorted by the sorting means 3038.

As described above, the in-vehicle apparatuses 3004 updates the using frequency every when the in-vehicle apparatuses 3004 are activated, and transmits security code in accordance with the updated using frequency.

The above-described in-vehicle apparatus activating information authenticating system 3005 according to the thirteenth embodiment is constructed so as to transmit security codes in the decreasing order of the using frequency when authenticating security codes by using the electric license card 3002, and can shorten a period of time from starting to transmit a security code from the electric license card 3002 to authenticating the security code by reducing number of times of transmitting security codes from the in-vehicle apparatus activating device 3003 as well as the effect of the twelfth embodiment of the in-vehicle apparatus activating information authenticating system 3001.

Note, the above-described in-vehicle apparatus activating information authenticating system 3005 according to the thirteenth embodiment is constructed so as to sort security codes in decreasing order of using frequency with the using frequency acquisition means 3037, but may provide the using record acquisition means of correcting using record that indicates the date of using the electric license card 3002 for every user, and to store the using record in the second storing means 3033 and of transmitting the security code that is stored in the second storing means 3033 and is ordered by date by the sorting means 3038 to the second storing means 3033.

In this case, the in-vehicle apparatus activating information authenticating system 3005 can shorten a period of time from starting to transmit a security code from the electric license card 3002 to authenticating the security code by reducing number of times of transmitting security codes from the in-vehicle apparatus activating device 3003.

### [Fourteenth Embodiment]

The in-vehicle apparatus activating information authenticating system 3005 according to the fourteenth embodiment is shown in FIG, 25.

In this embodiment, the first communicating unit 3021 means the communicating unit contained in the electric driver's certificate.

In this embodiment, the security code authenticating means 3022 means the security code authenticating unit.

In this embodiment, the security code rejecting means 3024 means the security code rejecting unit.

In this embodiment, the second communicating unit 3031 means the communicating unit equipped on the in-vehicle activating authenticating device.

In this embodiment, the person authenticating means 3032 means the person authenticating unit.

In this embodiment, the second storing means 3033 means the storing unit equipped on the in-vehicle activating authenticating device.

In this embodiment, the security code transmitting means 3036 means the security code transmitting unit.

In this embodiment, the annunciating means 3039 means the annunciating unit.

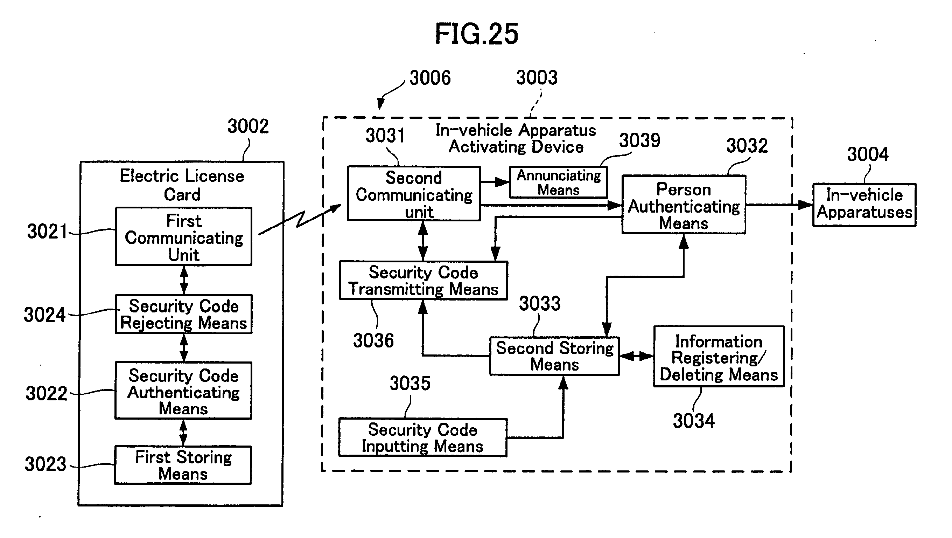

As shown in FIG 25, the in-vehicle apparatus activating system 3006 further provides the security code rejecting means contained in the electric license card 3002 of rejecting further receiving of security codes when number of times that the security code authenticating means 3022 fails continuously to authenticate the security code transmitted from the second communicating unit 3031 of the in-vehicle apparatus activating device 3003 to the first communicating unit 3021 exceeds a predetermined number, and the annunciating means mounted in the in-vehicle apparatus activating device 3003 of annunciating annunciation for restricting transmitting of security code, before the electric license card 3002 rejects further security codes, that is, when the number of times that the security code authenticating means 3022 fails continuously to authenticate the security code is exceeds another predetermined number less than the predetermined number, in addition to the twelfth embodiment shown in FIG 21.

Because other constituent elements are the same as the twelfth embodiment shown in FIG 21, other constituent elements are given the same reference numbers, and are not explained again.

The operation of the in-vehicle apparatus activating system 3006 constructed above is described with reference to the time chart of FIG 25, hereinafter.

Each process of registering security code (S3041), determining (S3042) and starting (S3043) to transmit from the person authenticating means 3032 to the electric license card 3002, transmitting security codes from the security code transmitting means 3036 to the electric license card 3002 (S3044), authenticating security codes by the security code authenticating means 3022 (S3045), and sequentially transmitting secret codes by the security code transmitting means 3036 when the security code authenticating means 3022 fails to authenticate the previous transmitted security codes (S3045) is the same as each of S3001, S3002, S3003, S3004, S3005, and S3006 shown in the time chart of FIG 22.

When the security code authenticating means 3022 fails to authenticate security code, the security code transmitting means 3036 sequentially transmits security code (S3045).
The security code authenticating means 3022 authenticates the security code, and the security code rejecting means 3024 counts number of times that the security code transmitting means has already transmitted security codes to the electric license card 3002.

The security code rejecting means 3024 determines whether or not the number of times exceeds the predetermined number (for example, 2) that is less than another predetermined number (for example, 3) that the security code rejecting means 3024 rejects further receiving of security codes (S3047).

When the security code authenticating means 3022 of the electric license card 3002 authenticates a security code, transmitting personal information from the second storing means 3033 to the person authenticating means 3032 (S3053), person authenticating by the person authenticating means 3032 (S3055), ordering the in-vehicle apparatuses 3004 by the person authenticating means (S3056), and activating the in-vehicle apparatuses 3004 are executed in the same manner as S3008, S3009, S3010, S3011, and S3012 of the time chart shown in FIG 22.

Therefore, the detailed explanation is omitted.

On the other hand, when the security code authenticating means fails continuously to authenticate two security codes, the security code rejecting means 3024 a piece of information informing the security code rejecting means 3024 rejects further security codes to the second communicating unit 3031 through the first communicating unit 3021 (S3048).

The annunciating means 3039 annunciates a piece of annunciation annunciating that inputting of security codes will be restricted hereafter with sound, flickered light, letter indication, etc. (S3049), and encourages inputting of a security code to the user (S3050).

When a security code is inputted in response to the above encouraging through the security code inputting means (S3035), the security code is transmitted from the second communicating unit 3031 to the first communicating unit 3021 (S3052) to be authenticated in the security code authenticating means 3022.

When the security code is authenticated in the security code authenticating means 3022, the security code rejecting means 3024 resets the counting number indicating the number of receiving security codes.

The in-vehicle apparatus activating device 3003 receives a piece of personal information through the second communicating means 3031, and authenticates the security code with a piece of reference personal information read out from the second storing means 3033.
When the security code is authenticated, the in-vehicle apparatus activating device 3003 issues activating information to the in-vehicle apparatuses 3004.

On the other hand, the security code received after the security code rejecting means 3024 has issued the information of restricting is not authenticated in the security code authenticating means 3022, the user is prohibited to use the in-vehicle apparatuses 3004, and is forced to go to a predetermined public office (for example, a police office) to reset the prohibited state.

As described above, the in-vehicle apparatus activating system 3006 according to the fourteenth embodiment can improve security by prohibiting continuously to input non-authenticated security codes to the electric license card 3002, and can reduce the probability of rejecting further to input security codes.

Further, the in-vehicle apparatus activating system 3006 cannot only ensure security, but also activate the in-vehicle apparatuses 3004, so that the user can correctly input the security code, or can ask a person who has been previously authenticated to obtain authentication by using the person's electric license card, because the annunciation of restricting inputting of the security code is issued

This embodiment is constructed so that the annunciating means 3039 annunciates a piece of annunciation when the number of receiving of security codes counted by the security code rejecting means 3024 exceeds the predetermined number, but the in-vehicle apparatus activating device 3003 may count the number of transmitting of security codes from the security code transmitting means 3036 to activate the annunciating means 3039.

## Claims

1. An authenticating apparatus, comprising:
an in-vehicle communicating unit for communicating with an electric license card storing license card information including a driver identification information;
an authenticating unit for authenticating said license card information; and
an activating unit for activating at least one function equipped on a vehicle,
**characterized by** that
said in-vehicle communicating unit is operative to obtain said license card information and activating information of activating at least one function mounted on said vehicle from said electric license card, and said activating unit is operable to activate functions designated by said activating information, when said authenticating unit correctly authenticates said license card information.

2. The authenticating apparatus as set forth in claim 1, in which said in-vehicle communication unit is operative to transmit position information specified by a position on the outer surface of said vehicle when acquiring said license card information and said activating information, and
said activating unit is operative to activate functions designated by said activating information transmitted from said electric license card in accordance with said position information.

3. The authenticating apparatus as set forth in claim 2, in which said in-vehicle communicating unit is operative to transmit said position information, when said electric license card is existing adjacent to said in-vehicle communicating unit, and
said authenticating unit is operative to authenticate said license card information, when request for authenticating is issued from said electric license card.

4. An authenticating apparatus, comprising:
an in-vehicle communicating unit for communicating with an electric license card storing license card information including a driver's identification information; an authenticating unit for authenticating said license card information; an activating unit for activating at least one of operations of a vehicle; and a storing unit for storing functions mounted on said vehicle to be permitted for each of drivers by relating said functions to said license card information,
**characterized by** that
said in-vehicle communicating unit being operative to obtain said license card information from said electric license card, and said activating unit activates functions related to said license card information stored in said storing unit, when said authenticating unit correctly authenticates said license card information.

5. The authenticating apparatus as set forth in one of claims 1 - 4, in which said activating unit is connected to an engine control apparatus for controlling an engine of said vehicle, and is operative to activate said engine, when said authenticating unit correctly authenticates said license card information.

6. The authenticating apparatus as set forth in one of claims 1 - 5, in which said activating unit is connected to a door unlocking apparatus for unlocking doors of said vehicle, and is operative to unlock said doors, when said authenticating unit correctly authenticates said license card information.

7. The authenticating apparatus as set forth in one of claims 1 - 5, in which said activating unit is connected to an in-vehicle telephone apparatus, and is operative to activate said in-vehicle telephone apparatus, when said authenticating unit correctly authenticates said license card information.

8. The authenticating apparatus as set forth in one of claims 1 - 5, in which said activating unit is connected to an in-vehicle audio apparatus, and is operative to activate said in-vehicle audio apparatus, when said authenticating unit correctly authenticates said license card information.

9. The authenticating apparatus as set forth in one of claims 1 - 5, in which said activating unit is connected to a combination meter apparatus, and is operative to activate said combination meter apparatus, when said authenticating unit correctly authenticates said license card information.

10. The authenticating apparatus as set forth in one of claims 1 - 5, in which said activating unit is connected to an emergency report apparatus, and is operative to activate said emergency report apparatus, when said authenticating unit correctly authenticates said license card information.

11. The authenticating apparatus as set forth in one of claims 1 - 5, in which said activating unit is connected to a road-vehicle communication apparatus, and is operative to activate said road-vehicle communication apparatus, when said authenticating unit correctly authenticates said license card information.

12. An authenticating apparatus, comprising:
a communicating unit for communicating with a on-certificate communicating unit mounted on an electric license card;
a storing unit for storing a security code and corresponding personal information;
a security code inputting means for inputting said security code for licensing at least one in-vehicle apparatus;
an information registering/deleting means for registering said security code and said personal information read out from said electric license card in response to said security code inputted from said security code inputting means in said storing unit, and deleting said security code and said personal information registered in said storing unit;
a security code transmitting means for sequentially transmitting security codes registered in said storing unit from said communicating unit to said on-certificate communicating unit until said electric license card authenticates one of said transmitted security codes, before starting to communicate with said communicating unit;
a personal authenticating means for activating at least one of said in-vehicle apparatuses, when personal information received by said in-vehicle communicating unit agrees with personal information registered in said storing unit.

13. The authenticating apparatus as set forth in claim 12, further comprises a using frequency acquisition means for acquiring and storing using frequency of every driver, and
said security code transmitting means being operative to transmit security code in decreasing order of using frequency stored in said using frequency acquisition means.

14. The authenticating apparatus as set forth in claim 12, further comprises a using record acquisition means for acquiring using record of the in-vehicle apparatuses of every driver, and
said security code transmitting means being operative to transmit security code in order by date stored in said using record acquisition means.

15. The authenticating apparatus as set forth in one of claims 12 - 14, further comprises an annunciating means for annunciating a piece of annunciation annunciating restricting of security code inputting before prohibiting of security code inputting when the number of transmitting security code from said communicating unit mounted on the in-vehicle apparatus activating device to said communicating unit on the electrical license card is exceeds a predetermined number and restricting information is issued from said electric license card to said communicating unit of said in-vehicle apparatus activating device.

16. An electric license card, comprising:
a storing unit of storing license card information including driver identifying information; and an internal communicating unit for communicating with a vehicle or in-vehicle apparatuses,
**characterized by** that
said storing means is operative to store function information informing about function of vehicle to be activated, and
said internal communicating unit is operative to inform said license card information and said function information to said vehicle or said in-vehicle apparatuses.

17. The electric license card as set forth in claim 16, in which said internal communicating unit is operative to receive position information of said vehicle or said in-vehicle apparatuses, and is operative to inform activating information corresponding to said position information to said vehicle or said in-vehicle apparatuses.

18. An authenticating system, comprising;
an electric license card providing a storing unit of storing license card information including driver identifying information, and an internal communicating unit of communicating with a vehicle or in-vehicle apparatuses; and an authenticating device providing an in-vehicle communicating unit of communicating with said internal communicating unit, an authenticating unit of authenticating said license card information, and an activating unit of activating of activating the in-vehicle apparatuses,
**characterized by** that
said storing means stores function information informing about function of vehicle to be activated,
said internal communicating unit being operative to inform said license card information and said function information to said vehicle or said in-vehicle apparatuses,
said in-vehicle communicating unit is operative to receive said license card information and said activating information for activating said in-vehicle apparatuses,
said activating means is operative to activate said in-vehicle apparatuses designated by said function information when said authenticating unit correctly authenticates said license card information.

19. The authenticating system as set forth in claim 18, in which said authenticating unit is operative to transmit authenticating result as reserving of using said in-vehicle apparatuses to said electric license card.

20. The authenticating system as set forth in claim 18, in which said authenticating device is operative to transmit operating information informing whether or not said in-vehicle apparatuses have been activated as a result of authenticating.

21. The authenticating system as set forth in one of claims 18 - 20, in which said authenticating device is operative to store activating information informing which of in-vehicle apparatuses can be activated according to said electric license card, and controls activating of said in-vehicle apparatuses according to said electric license card.

22. The authenticating system as set forth in one of claims 18 - 21, in which said electric license card is of a non-contact IC card type.

23. An authenticating system, comprising:
an electric license card providing a storing unit included in an electric license card of storing license card information and security code for reading out said license card information, a communicating unit included in the electric license card of communicating with a vehicle or in-vehicle apparatuses, and a security code authenticating unit for controlling transmitting by said communicating unit included in said electric license card; and
an authenticating device providing a communicating unit mounted in the authenticating device, a security code inputting unit of inputting security code, a storing unit mounted on said authenticating device of storing said security code inputted from said security code inputting unit a security code, transmitting unit of transmitting said security code stored in said storing unit mounted on said authenticating device to said communicating unit mounted on said authenticating device, and a person authenticating unit of authenticating said license card information, and of activating the in-vehicle apparatuses,
**characterized by**
said storing unit included in said electric license card being operative to store function information informing about function of the vehicle,
said communicating unit mounted on said authenticating device being operative to transmit said security code transmitted from said security code transmitting unit to said electric license card,
said security code authenticating unit is operative to determine whether or not said security code transmitted from said authenticating device agrees with security code stored in said storing unit included in said electric license card, and transmits said license card information and the function information when said security code authenticating unit determines said security code transmitted from said authenticating device agrees with security code stored in said storing unit included in said electric license card,
said communicating unit mounted on said authenticating device is operative to receive said license card information and said activating information informing said function to be activated, and
said person authenticating unit is operative to activate said in-vehicle apparatuses designated by said function information when said person authenticating unit correctly authenticates said license card information.

24. The authenticating system as set forth in claim 23, which further comprises a using frequency acquisition means of acquiring using frequency of said in-vehicle apparatuses activated by said electric license card according to the user, and
said security code transmitting unit being operative to transmit security code in decreasing order of using frequency stored in said storing unit mounted on said authenticating device.

25. The authenticating system as set forth in claim 23, which further comprises using record acquisition unit of acquiring using record of said in-vehicle apparatuses activated by said electric license card according to the user, and
said security code transmitting unit is operative to transmit security code in dating order of using record stored in said storing unit mounted on said authenticating device.

26. The authenticating system as set forth in one of claims 23 - 25, which further comprises a security code rejecting unit for rejecting further security codes when said number of continuously transmitting of security codes from said communicating unit mounted on said authenticating device to said communicating unit included in said electric license card exceeds a predetermined number, and an annunciating unit for annunciating a piece of annunciation annunciating for restricting inputting of security code before prohibiting inputting of security code.

27. An authenticating method of authenticating license card information by communicating between an electric license card storing license card information including driver identifying information, and said vehicle or said in-vehicle apparatuses mounted on said vehicle comprising:
an authentication requesting step of requesting authentication of license card information from an electric license card to a vehicle or in-vehicle apparatuses mounted on said vehicle;
an authenticating step of authenticating said license card information in said vehicle or said in-vehicle apparatuses;
an informing step of informing function information informing of said in-vehicle apparatuses to be activated to said vehicle or said in-vehicle apparatuses; and
an activating step of activating said vehicle or said in-vehicle apparatuses when said license card information is correctly authenticated.

28. The authenticating method as set forth in claim 27, which further comprises a position informing step of informing position information showing position of said electric license card to said vehicle or said in-vehicle apparatuses mounted on said vehicle, and
said electric license card informs function corresponding to said position information to said vehicle or said in-vehicle apparatuses mounted on said vehicle.

29. An authenticating method of authenticating license card information by communicating between an electric license card storing license card information including driver identifying information, and said vehicle or said in-vehicle apparatuses mounted on said vehicle comprising:
an authenticating step of authenticating said license card information in said vehicle or said in-vehicle apparatuses;
an informing step of informing said license card information and said function information to said vehicle or said in-vehicle apparatuses mounted on said vehicle when said electric license card determines that said security code transmitted from said vehicle or said in-vehicle apparatuses mounted on said vehicle agrees with said security code stored in said electric license card,
a receiving step of receiving said license card information and function information designating said in-vehicle apparatuses to be activated by said vehicle or said in-vehicle apparatuses mounted on said vehicle,
an activating step of activating said in-vehicle apparatuses designated by function information when said vehicle or said in-vehicle apparatuses correctly authenticates said license card information.
